(19) Europäisches Patentamt
European Patent Office
Office européen des brevets

(11) **EP 4 090 951 B1**

(12) **EUROPEAN PATENT SPECIFICATION**

(45) Date of publication and mention
of the grant of the patent:
**25.02.2026 Bulletin 2026/09**

(21) Application number: **20914319.7**

(22) Date of filing: **16.01.2020**

(51) International Patent Classification (IPC):
**G01N 21/64** $^{(2006.01)}$

(52) Cooperative Patent Classification (CPC):
**G01N 21/6408; G01N 21/6458;** G01N 2021/6419;
G01N 2021/6441

(86) International application number:
**PCT/IL2020/050075**

(87) International publication number:
**WO 2021/144784 (22.07.2021 Gazette 2021/29)**

(54) **SYSTEM AND METHOD FOR USE IN FRET MICROSCOPY**

SYSTEM UND VERFAHREN ZUR VERWENDUNG IN DER FRET-MIKROSKOPIE

SYSTÈME ET PROCÉDÉ POUR UNE UTILISATION EN MICROSCOPIE À TRANSFERT D'ÉNERGIE PAR RÉSONANCE DE TYPE FÖRSTER (FRET)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.11.2022 Bulletin 2022/47**

(73) Proprietor: **YISSUM RESEARCH DEVELOPMENT COMPANY OF THE HEBREW UNIVERSITY OF JERUSALEM LTD**
**9139002 Jerusalem (IL)**

(72) Inventor: **SHERMAN, Eilon**
**9076940 Mevaseret-Zion (IL)**

(74) Representative: **Modiano, Gabriella Diana et al**
**Modiano & Partners SA**
**Steinsdorfstraße 14**
**80538 München (DE)**

(56) References cited:
**WO-A1-2020/016887      US-A1- 2013 345 391**
**US-A1- 2017 370 847**

• **JAZI A A ET AL:** "Caging and Photoactivation in Single-Molecule F�rster Resonance Energy Transfer Experiments", vol. 56, no. 14, 31 March 2017 (2017-03-31), pages 2031 - 2041, XP055958393, ISSN: 0006-2960, Retrieved from the Internet <URL:http://pubs.acs.org/doi/pdf/10.1021/acs.biochem.6b00916> [retrieved on 20230816], DOI: 10.1021/acs.biochem.6b00916

• **JARES-ERIJMAN E A AND JOVIN T M:** "FRET imaging", NATURE BIOTECHNOLOGY, NATURE PUBLISHING GROUP US, NEW YORK, vol. 21, no. 11, November 2003 (2003-11-01), pages 1387 - 1395, XP002394606, ISSN: 1087-0156, DOI: 10.1038/NBT896

• **TINNEFELD P ET AL:** "Optical switches: key molecules for improved fluorescence imaging and tracking with high optical resolution", PROCEEDINGS OF SPIE, VISUAL COMMUNICATIONS AND IMAGE PROCESSING 2005, vol. 6633, 5 July 2007 (2007-07-05), Visual Communications and Image Processing 2005, 2005, Beijing, China, pages 663303, XP055115272, ISSN: 0277-786X, DOI: 10.1117/12.728016

- PENG S ET AL: "Single-Molecule Photoactivation FRET: A General and Easy-To-Implement Approach To Break the Concentration Barrier", ANGEWANDTE CHEMIE INTERNATIONAL EDITION, VERLAG CHEMIE, HOBOKEN, USA, vol. 56, no. 24, 11 May 2017 (2017-05-11), pages 6882 - 6885, XP072090768, ISSN: 1433-7851, DOI: 10.1002/ANIE.201702731
- HELM, PAUL JOHANNES: "Proposal of a New Method for Measuring Forster Resonance Energy Transfer (FRET) Rapidly, Quantitatively and Non-Destructively", INTERNATIONAL JOURNAL OF MOLECULAR SCIENCES, vol. 13, no. 10, 26 September 2012 (2012-09-26), pages 12367 - 12382, XP055396116
- RICHARDS, CHRIS I . ET AL.: "FRET-enabled optical modulation for high sensitivity fluorescence imaging", JOURNAL OF THE AMERICAN CHEMICAL SOCIETY, vol. 132, no. 18, 16 April 2010 (2010-04-16), pages 6318 - 6323, XP055409645

**Description**

## TECHNOLOGICAL FIELD

The present invention relates to techniques for detection of molecular structures and/or interactions, the invention specifically relates to detection techniques using fluorescence spectroscopy and microscopy.

## BACKGROUND

Majority of the modem (bio)molecular techniques used in pathogen detection are based upon sequence-based recognition of DNA, structural recognition of pathogens or pathogen biomarkers. However, the selection of the pathogen biomarkers introduces a serious challenge in the development of the sensors for detection of the biological pathogens. This is because most of the pathogen biomarkers have low selectivity and can distinguish between general classes of microorganisms but are not able to identify the specific species or strain of organism. For example, calcium dipicolinate is a unique component of endospores. Dipicolinic acid can therefore be used to indicate the presence of endospores, but it cannot be able to distinguish between the very dangerous *Bacillus anthracis* spores and other non-toxic *Bacillus* spores. The presence of the DNA as an additional indicator will be able to determine that the unknown material is biological in nature but will not be able to identify its source (unless extensive sequence-based analysis is used). Also, cell metabolites are generally common to many different cell types and therefore extremely difficult to use for discrimination between specific microorganisms. In view of the above, there is a long-felt need for new methods and devices to detect and identify biological pathogens.

## GENERAL DESCRIPTION

The present technique provides a system and method for inspecting a sample, e.g. by monitoring and/or imaging of at least a region of the sample. Generally, the present technique utilizes detection of fluorescence resonance energy transfer (FRET) events occurring within the sample. Additionally, the present technique may be used for analysis of parameters of such FRET events, such as interaction distances, detection of existence and/or amount of selected molecular structures such as DNA/RNA sequence, pathogens etc.

In "Caging and Photoactivation in Single-Molecule Förster Resonance Energy Transfer Experiments", Biochemistry vol. 56(14), Jazi A et al. describe caging of cyanine fluorophores and caged rhodamine dyes, i.e., chemical deactivation of fluorescence, for single-molecule Förster resonance energy transfer (smFRET) experiments with freely diffusing molecules.

More specifically, to determine existence and/or location of selected molecular structures/sequences within a sample, selected molecular probes including donor fluorophores and acceptor fluorophores are introduced into the sample. The molecular probes are selected as having affinity to attach/adsorb onto corresponding molecular binding sites, and the respective fluorophores provide optical fluorescence in response to exciting illumination. To provide accurate detection of selected molecular structures, the probes associated with the donor and acceptor fluorophores are selected to attach to respective parts of the target structure. Generally the term binding site as used herein, and binding of molecular probe into selection structure of a target molecule may include specific binding site, such as specific DNA, RNA or protein sequences, as well as non-specific binding where the probe are selected to adsorb onto selected molecules while not specifically to a selected sequence therein. When attached to the target structure, the donor and acceptor fluorophores are at close proximity between them, enabling FRET process between the fluorophores, while when not attached to the selected structures, the fluorophores are statistically arranged and generally relatively farther from one another (typically at distances of over 10 nm, 20nm or over 50nm). Generally, such close proximity between the donor and acceptor fluorophores can be detected by detecting respective FRET events, however these events may be masked by the high fluorescence emission of the donor and acceptor fluorophores that do not take part in FRET events. To this end the present technique utilizes detection of single frustrated FRET events enabling to properly detect the selected molecular structure over the high fluorescence background.

The system of the present disclosure includes a light unit configured for illuminating the sample with at least two different wavelength ranges. The first wavelength range is selected to provide optical excitation of a first, donor fluorophore used in the sample and the second wavelength range is selected to provide excitation of a second, acceptor fluorophore used in the sample. As indicated above, the fluorophores are provided to the sample in combination with selected molecular probes and are selected such to allow FRET interaction between the donor and acceptor fluorophores at certain range of distances between them.

Generally, the term "fluorophore" refers to any substance or molecule that emits light of emission wavelength in response to illumination with light of a corresponding first excitation wavelength. Various Fluorophores are known and may be used in the framework of the present technique, and preferably fluorophores capable to be switched on or off by external optical and/or chemical signal including for example: quantum dots (e.g. semiconductor QD's), Fluorescein, Rhodamine, lipophilic fluorescent stains, Fluorescein Isothiocyanate (FITC), fluorescent proteins, Photoactivatable or photoswitchable fluorescent proteins, quantum rods, quenchers, caged fluorophores, bioluminescent emitters, nanodiamonds, chemiluminescent emitters or phosphorescent emitters.

Fluorescence resonance energy transfer (FRET) or Förster resonance energy transfer, relates to a mechanism in which energy absorbed by one (donor) fluorophore is transferred by non-radiation mechanism, to another (acceptor) fluorophore resulting in optical emission from the acceptor fluorophore. The efficiency of this energy transfer is inversely proportional to the sixth power of the distance between donor and acceptor, making FRET extremely sensitive to small changes in distance. In this connection it should be noted that the terms "donor fluorophore" and "acceptor fluorophore" may be referred to throughout the application merely as "donor" or "acceptor". Generally, the sample is prepared by introducing selected probes carrying or associated with suitable fluorophores including donor and acceptor fluorophores. The selected probes are used for detecting one or more molecular structure/sequences in the sample.

As indicated above, the present technique and corresponding system are configured to detect the existence of selected molecular structures in the sample using detection of FRET events. Such structures may be DNA sequences, RNA sequences, various epitopes recognized by antibodies, etc. To properly identify FRET events over emission associated with direct excitation of the fluorophores, the present technique operates for collection of light emitted from the donor fluorophores, namely a fluorescence illumination in response to illumination of the first wavelength range. The collection may utilize optical arrangement for imaging a selected plane in the sample and generating image data corresponding with light emission from fluorophores in the sample. Additionally or alternatively, collection of light emitted by fluorophores in the sample may include collection of light from one region of the sample without actual imaging, and providing data on variation in intensity of emission from the relevant region. Thus, the present technique utilizes illumination of the sample with at least a first, donor excitation wavelength range, and a second acceptor excitation wavelength range. The second, acceptor exciting wavelength range is temporally modulated (e.g. intensity modulated), thereby causing shifts between FRET events and frustrated FRET, i.e. a situation in which the acceptor fluorophore is already excited and therefore cannot take part in FRET event. Light emitted from the sample is collected and filtered to allow detection of emitted light at wavelength range associated with donor emission. When probes associated with the donor fluorophores are located at sufficiently close proximity with probes associated with acceptor fluorophores, the emission of the donor fluorophore is modulated between FRET and frustrated FRET. Such modulation can be detected by collection of emission light at the wavelength range associated with donor emission, and identifying modulation having similar profile to the modulation of illumination at the second, acceptor exciting wavelength range.

Further, to avoid significant background noise of emission of the whole population of the donor fluorophores, the donor fluorophores used in the sample are selected from a group of fluorophores having switchable photoactivity. More specifically, the fluorescence activity of at least the donor fluorophores is controllable or varies in a predictable way such that the number of active donor fluorophores at any time of the monitoring/imaging is controlled to be a very small quantity. For example, the technique may utilize photoactivated donor fluorophores, such that the donors in the sample are inactive and become active in response to illumination of a certain (third, activation) illumination wavelength range. Alternatively, the technique may utilize chemically activated donor fluorophores, i.e. donor fluorophores that are activated in response to interaction with selected chemical reactants introduced into the sample.

To this end, the present technique utilizes single molecule localisation microscopy (SMLM) techniques, by activating very small amount of donor fluorophores in the sample, combined with detection of FRET events (generally modulated between frustrated and non-frustrated modes) in the sample to identify selected molecular structures (e.g. DNA sequence, RNA sequences, antigens or various epitopes as detected by antibodies).

Summary of the invention

A first aspect of the present disclosure provides a system for monitoring and/or imaging a sample as defined with appended independent claim 1. The system includes a light unit, which may include one or more light sources, configured for illuminating the sample in at least two different wavelength ranges. The system includes an activation unit configured for controlling the portion of activated fluorescent substances in the sample, in particular donor fluorophores suitable for FRET interaction with a suitable acceptor fluorophores.

The system includes a collection unit configured for collecting a light emitted from the sample in at least a third wavelength range and directing said emitted light towards at least one detector. A processing circuitry of the system is configured for operating the light unit to determine a selected temporal illumination profile of said at least two different wavelength ranges and for operating the activation unit for obtaining controlled population of selected activated fluorophores in the sample. It should be understood that the processing circuitry represents one or more distributed processors that operate the system and perform its functionality.

The collection unit generally comprises a spectral filter selected for transmitting light of a third wavelength range, typically associated with emission of the donor fluorophores in the sample. The collection unit may further comprise an optical arrangement (e.g. one or more lenses, apertures, prisms) configured and positioned for imaging a selected region of the sample onto a selected detection plane, where a detector unit may be positioned. This configuration enables detection of location of the fluorophores associated with emission of the collected light. The collection unit may alternatively comprise optical arrangement configured for transmitting collected light while not providing imaging of the sample, indicating general variation in intensity of emitted light without indicating location of each emitter.

The at least two wavelength ranges comprise a first donor fluorophore excitation wavelength range, for exciting donor fluorophores, and a second, acceptor fluorophore excitation wavelength range, for exciting acceptor fluorophores.

In some embodiments of the system, the light unit includes at least a donor illumination light source for providing the donor fluorophore excitation light wavelength range and an acceptor illumination light source for providing the acceptor fluorophore excitation light wavelength range.

In some embodiments of the system, the activation unit includes a photoactivation light source configured to illuminate a fourth, photoactivating illumination wavelength range for photoswitching a selected population of fluorophores in the sample, e.g. donor fluorophores, to active mode in which they can exhibit fluorescence.

The processing circuitry is configured for operating the activation light source to provide a selected temporal photoactivation illumination intensity profile of the fourth wavelength range. The intensity of the illumination is selected such that a desired portion of fluorophores are switched from inactive mode to active mode.

In some embodiments of the system, the temporal photoactivation illumination of the fourth wavelength range includes at least one of: a pulse temporal pattern and continuous illumination pattern.

In some embodiments of the system, the activation unit is configured for controllably releasing activating reactant for obtaining the desired portion of fluorophores are switched from inactive mode to active mode.

In some embodiments of the system, the light unit includes an optical arrangement adapted for directing the at least three different wavelength ranges towards a common selected region of the sample.

In some embodiments of the system, the third wavelength range is different from the at least two different wavelength ranges. In some embodiments, the fourth different wavelength range is different from the first, second and third wavelength ranges.

In some embodiments of the system, the third wavelength range comprises one or more donor fluorescence emission wavelengths.

The processing circuitry is configured for controlling the light unit to provide the selected temporal illumination profile of the first and the second wavelength ranges. The temporal illumination profile is selected from any one of: a pulse temporal pattern, namely any known illumination pattern over time, and continuous illumination. For example, the illumination of the first wavelength range may be substantially continuous and the illumination intensity profile of the second wavelength range may be of a any selected time-varying pattern.

In some embodiments of the system, the selected temporal photoactivation illumination intensity profile is configured for photoactivating, i.e. photoswitching between non-active and active mode of donor fluorophore, a portion of respective donor fluorophore population for activating a relatively low and desired number of fluorophores to avoid significant background noise.

In some embodiments, the activation unit is configured for activating small number of fluorophores within a region of diffraction limited spot in the sample for a given activation signal. For example, the activation unit may be configured for providing activation signal having activation probability of $1:10^{10}$-$1:10^{23}$. For example, the activation unit is configured for activating up to 1, 2, 3, 4, 5, 6, 7, 8, 9, or 10 fluorophores in each activation signal. The diffraction limited spot is determined by the characteristics of the optical elements used in the collection unit. In some embodiments, the portion of activated fluorophores is sufficiently low such that up to 10 fluorophores at any single diffraction limited spot.

In some embodiments of the system, the selected intensity of the fourth illumination wavelength range is temporally modified to maintain a desired number of photoactivated (or photoswitched) fluorophores in the detected area of the sample.

In some embodiments of the system, the selected intensity of the fourth illumination wavelength range is increasing gradually over time.

In some embodiments of the system, the processing circuitry is configured for controlling the light unit to provide the selected temporal illumination profile of the first and second wavelength ranges. In some embodiments, the processing circuitry is configured for controlling the light unit to provide a selected temporal intensity modulation pattern of the second, acceptor excitation wavelength range. The second, acceptor excitation wavelength range temporal intensity modulation pattern is selected for saturating the acceptor fluorophores at a known and desired time.

The system includes a detector configured for detecting light collected by the collection unit and generate at least one stream of data pieces collected at a selected and sufficient sampling rate. The stream of data pieces includes intensity profile of the collected light over time. Generally, the stream of data pieces may be in the form of sequence of intensity measurements, sequence of image frames of the sample, video sequence of emission from the sample etc.

In some embodiments of the system, the detector includes a pixel array positioned at an image plane with respect to at least a region of the sample.

The processing circuitry is configured for receiving and processing the at least one stream of data pieces (interchangeably referred to as "detection data" or "detection data pieces" throughout the application) to identify modulated intensity profile of the collected light within one or more time-windows to provide output data thereof.

In some embodiments of the system, the processing circuitry is configured to select said one or more time-windows by identifying variation of intensity profile over time in said at least one stream of data pieces. The variation of the intensity indicates potential FRET events that result in response to the illumination modulation of the second illumination wavelength. The processing circuitry is configured to identify a match between the variation of the detected intensity and the modulated illumination pattern of the second illumination wavelength range, such matching is correlated with a FRET event.

In some embodiments of the system, the processing circuitry is configured to determine in the at least one stream of data pieces FRET interaction distances, namely inter fluorophore distances down to sub-nanometers scale. Therefore, the distances between the interacted fluorophores can be determined, which may be indicative of the relative binding sites of the fluorophores to the substance of interest, e.g. a DNA or RNA sequence of a pathogen or a protein, or an epitope thereof.

In some embodiments of the system, the one or more time-windows is associated with a selected duration following illumination of a pulse of a fourth, photoactivation illumination wavelength range.

In some embodiments of the system, the processing circuitry is configured to apply frequency-time domain manipulation on the data pieces in said one or more time windows. The frequency-time domain manipulation may be selected, but not limited to, any one of: temporal Fourier Transform, matched filters, Wigner filters and machine learning. The manipulation serves to enhance the signal to noise of the time-modulated frustrated FRET signal (which is indicative of FRET events).

In some embodiments, the system includes a sample mount configured for placement of the sample. The sample mount may be either a physical element that is configured to be attached to a sample chamber including the sample or a location with respect to the system that is suitable for placement of a sample to be monitored and/or imaged.

In some embodiments, the system includes a sample chamber containing the sample and mounted on the sample mount.

Another aspect of the present disclosure provides a method for monitoring and/or imaging a sample according to appended independent claim 8. The method includes providing a selected portion of activated fluorophores in the sample. In other words, the method includes controlling of the portion of selected activated fluorophores in the sample at any time. The controlling may be either active or passive according to the selected fluorophores. For example, active control may be by illuminating the sample with illumination suitable for photoactivation of the selected fluorophores or reacting the fluorophores with activating reactants. For example, in the case of caged fluorophores, a fluorophore becomes active after (photo or chemical) removal of the caging moiety optically or chemically. In some embodiments, the controlling is performed passively, namely by including a selected number/concentration of fluorophores in the sample that photoswitching to active mode spontaneously. The number/concentration of the fluorophores is selected such that a desired number of fluorophores are active at any time.

The method further includes illuminating at least a region of the sample with a first illumination wavelength range and a temporally modulated second wavelength range. The method includes collecting and detecting light of a third wavelength range emitted from the sample to provide data pieces associated with intensity profile of emission from the sample.

In some embodiments, the method includes processing the data pieces and identifying modulated intensity profile of the collected light within one or more time windows in one or more regions of the sample.

In some embodiments of the method, the one or more time windows are associated with a duration following a respective pulse illumination of a fourth wavelength range that is suitable for photoactivation of a portion of fluorophores in the sample.

In some embodiments of the method, the one or more time windows are associated with a time variation of intensity profile of the detected third wavelength range. In other words, the time windows of interest are these with a variation of intensity of the detected light that may be indicative of a FRET event.

In some embodiments of the method, said identifying modulated intensity profile of the collected light within one or more time windows includes identifying a modulation of the intensity at a certain modulation pattern corresponding to the temporal modulated illumination of the second wavelength range.

In some embodiments of the method, the processing includes identifying FRET events and/or FRET interaction distances.

In some embodiments, the method includes activating a desired portion of fluorophores in the sample.

In some embodiments of the method, the activating includes illuminating the at least a region of the sample with a temporal photoactivating intensity profile of a fourth illumination wavelength range.

In some embodiments of the method, the photoactivating intensity profile is selected from at least one of: a pulse temporal pattern and continuous illumination pattern.

In some embodiments, the method includes reacting the sample with activating reactants.

In some embodiments of the method, the intensity profile of the pulse pattern of the fourth wavelength range is selected to provide activation of a portion of respective donor fluorophore population.

In some embodiments, the method includes providing output data associated with said identified modulated intensity profile. The output data is indicative of FRET events and/or their parameters.

In some embodiments of the method, the first wavelength range includes a selected donor fluorophore excitation wavelength for exciting donor fluorophores.

In some embodiments of the method, the second wavelength range includes a selected acceptor fluorophore excitation wavelength for exciting acceptor fluorophores.

In some embodiments of the method, the fourth wavelength range includes a selected donor photoactivation wavelength for photoswitching the donor fluorophores to active mode, in which they can perform fluorescence.

In some embodiments, the portion is sufficiently low to activate up to 1, 2, 3, 4, 5, or 10 fluorophores within a region of diffraction limited spot in the sample for a given activation signal, the diffraction limited spot is determined by the characteristics of the optical elements used in the collection unit.

In some embodiments of the method, the third wavelength range is associated with selected donor fluorescence emission wavelength.

In some embodiments, the method includes providing a sample that includes a selected population of donor and acceptor fluorophores. In other words, the method includes providing a sample that includes a desired types of donors and acceptors and their desired number/concentration/ratio.

In some embodiments of the method, the donor and acceptor fluorophores are adapted for association with selected binding sites of substances in the sample. The association with the selected binding sites may be specific or non-specific. It is to be understood that binding sites may be specific binding sites in a molecules, e.g. a DNA/RNA sequence, an epitope, etc., or non-specific binding sites, namely the fluorophores may be suitable for general association with a target substance (e.g. a molecule) that can be at various sites on the substance.

In some embodiments, the method includes providing a sample and mixing it with a desired population of donor and acceptor fluorophores.

In some embodiments, the sample includes a biological matter, e.g. a urine sample, a blood sample, biopsies, body fluids such as saliva/sweat or any sample containing biological matter to be detected. In some embodiments the sample may include organic matter, that may not necessarily be biological.

In some embodiments of the method, the population of donor and acceptor fluorophores includes at least one of quantum dots, Fluorescein, Rhodamine, lipophilic fluorescent stains, Fluorescein Isothiocyanate (FITC), fluorescent proteins, Photoactivatable or photoswitchable fluorescent proteins, quantum rods, quenchers, caged fluorophores, bioluminescent emitters, nanodiamonds, chemiluminescent emitters or phosphorescent emitters.

Yet another aspect of the present disclosure provides a program storage device readable by machine, tangibly embodying a program of instructions executable by the machine to perform a method for monitoring a sample. The method includes: (a) providing a selected portion of activated fluorophores in said sample; (b) operating a light unit for illuminating at least a region of the sample with (i) a first illumination wavelength range and (ii) a temporally modulated second wavelength range; (c) operating a detector unit for collecting light of a third wavelength range and generating data pieces associated with intensity profile of the collected light; (d) processing said data pieces for identifying modulated intensity profile of said collected light within one or more time windows; and (e) generating output data indicative of said modulated intensity profile.

Yet another aspect of the present disclosure provides a computer program product comprising a computer useable medium having computer readable program code embodied therein for monitoring a sample. The computer program product includes: (a) providing a selected portion of activated fluorophores in said sample; (b) operating a light unit for illuminating at least a region of the sample with (i) a first illumination wavelength range and (ii) a temporally modulated second wavelength range; (c) operating a detector unit for collecting light of a third wavelength range and generating data pieces associated with intensity profile of the collected light; (d) processing said data piece for identifying modulated intensity profile of said collected light within one or more time windows; and (e) generating output data indicative of said modulated intensity profile.

Yet another aspect of the present disclosure provides a control unit connectable to illumination unit and a detector unit. The control unit includes: at least one processing circuitry including (a) operation module configured for operating the light unit for illuminating at least a region of the sample with (i) a first illumination wavelength range and (ii) a temporally modulated second wavelength range, and providing a selected portion of activated fluorophores in said; (b) detection module configured for operating the detector unit for collecting light of a third wavelength range and generating data pieces associated with intensity profile of the collected light; and (c) a processing module configured for receiving and processing said data pieces for identifying modulated intensity profile of said collected light within one or more time windows, and generating output data indicative of said modulated intensity profile.

## BRIEF DESCRIPTION OF THE DRAWINGS

The invention is limited only by the scope of the appended claims. In order to better understand the subject matter that is disclosed herein and to exemplify how it may be carried out in practice, embodiments will now be described, by way of non-limiting example only, with reference to the accompanying drawings, in which:

**Figs. 1A-1C** are schematic illustrations of exemplifying FRET process.

**Figs. 2A-2B** are schematic illustrations of exemplifying frustrated FRET process.

**Figs. 3A-3C** are block diagrams of non-limiting examples of different embodiments of the system according to an aspect of the present disclosure.

**Figs. 4A-4B** are schematic illustrations of non-limiting examples of different embodiments of the system according to an aspect of the present disclosure.

**Fig. 5 is** a schematic illustration of an example of a filter being used in the system of the present disclosure.

**Figs. 6A-6B** are schematic illustrations demonstrating the excitation illumination sequencing and the detected illumination profile. **Fig. 6A** shows the modulated excitation of both the donor and the acceptor during the imaging; **Fig. 6B** schematically shows the detected emission of the donor fluorophore in response to the illumination profile demonstrated in **Fig. 6A.**

**Figs. 7A-7D** are schematic illustrations of non-limiting embodiments of four different configurations of the detection unit of the system of the present disclosure.

**Figs. 8A-8C** are flow diagrams of non-limiting examples of the method of the present disclosure;

**Figs. 9A to 9D** exemplify detection of single FRET event and localization of detected event according to the present technique; **Fig. 9A** shows an exemplary image collected from a sample, **Fig. 9B** shows variation in collected donor emission intensity for a selected signal donor, **Fig. 9C** shows temporal frequencies of the collected intensity variations of **Fig. 9B,** and **Fig. 9D** shows histogram exemplifyign uncertainty in localization of detected molecules;

**Figs. 10A-10F** exemplify sample images and corresponding magnification of selected target and respective detection histograms, **Fig. 10A** shows for 'donor-acceptor', **Fig. 10B** shows magnification of a selected area of **Fig. 10A, Fig. 10C** shows 'donor only' field and **Fig. 10D** shows magnification of the selected region, **Fig. 10E** shows histogram of FRET efficiency *E*, and **Fig. 10F** shows histogram of donor/acceptor distance distribution; and

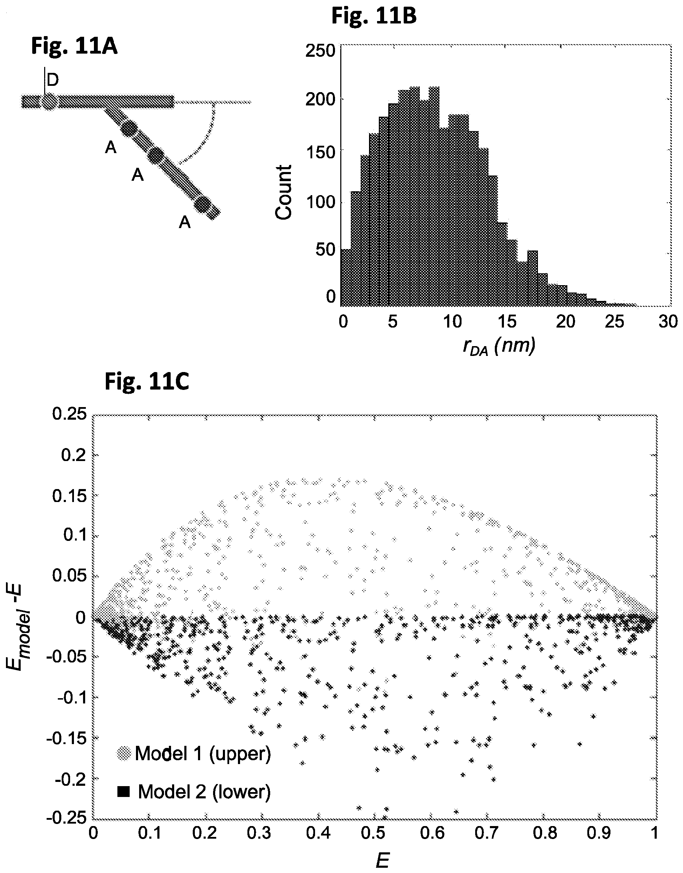

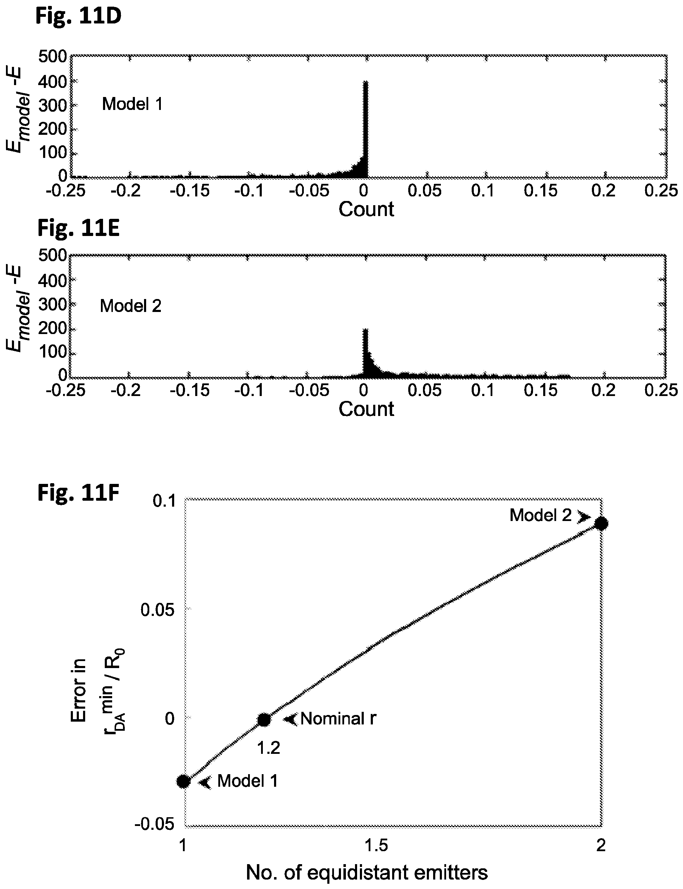

**Figs. 11A-11F** exemplify a technique for determining distance between single donor fluorophore and respective (nearest) acceptor fluorophore according to some embodiments of the present technique; **Fig. 11A** exemplifies a model arrangement of single donor **D** associated with a molecular structure in vicinity to three acceptor fluorophores **A, Fig. 11B** is a histogram showing distribution of possible intermolecular donor-acceptor distances, **Fig. 11C** shows scattering graph of energy transfer efficiency and errors of the models in determining FRET efficiency, **Figs. 11D and 11E** show prediction errors of the two models, and **Fig. 11F** exemplifies an error plot for determining donor-acceptor distance.

## DETAILED DESCRIPTION OF EMBODIMENTS

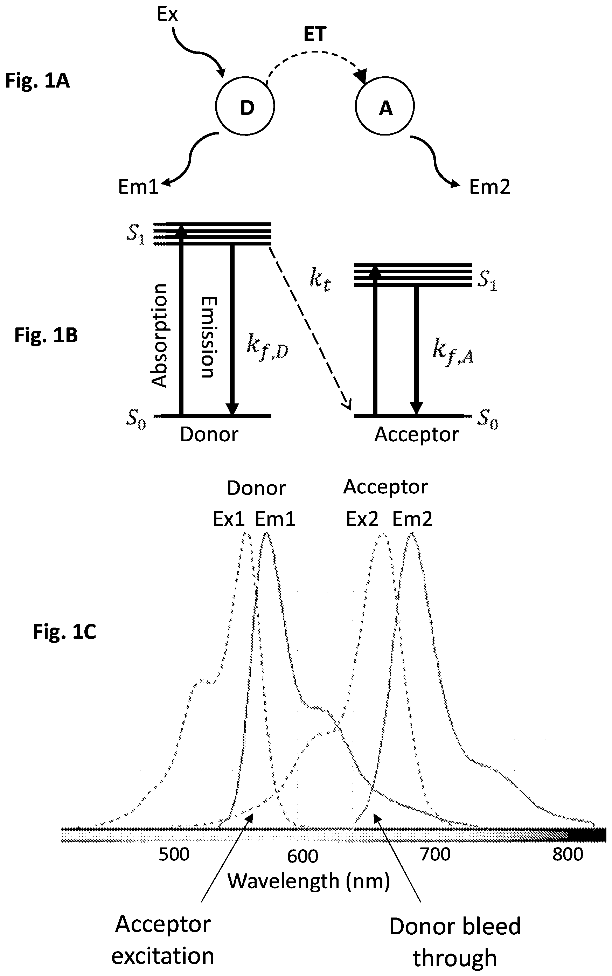

As indicated above, the present technique utilizes FRET and frustrated FRET detection to determine existence, amount and/or location of selected molecular structures in a sample. Reference is first made to **Figs. 1A-1C,** exemplifying certain concepts of FRET interactions between a donor fluorophore **D** and an acceptor fluorophore **A. Fig. 1A** exemplify excitation of donor **D,** e.g. green fluorescent protein (GFP), by exciting energy Ex, e.g. blue light. As shown, the donor may relax by fluorescent emission Em1 or transfer the energy **ET** to a nearby acceptor fluorophore **A,** causing the acceptor fluorophore **A** to relax by fluorescent emission **Em2. Fig. 1B** illustrates electronic states of the donor and acceptor fluorophores, and the energy transfer in FRET process. Generally, the Donor is excited from electronic ground state $S_0$ to an excited state $S_1$ by absorption light of the first wavelength range. Generally, the donor very quickly relaxes from a high excited state by interconversion or preparative relaxation to the first electron excited state. From there the donor can go back to the ground state either through the non-radiative decay interconversion, or through the radiative pathway by emitting a photon. In when a suitable acceptor molecule, having sufficiently overlapping orbitals is near by, the energy may be transferred non-radiatively to the acceptor, exciting it from the ground state $S_0$ of the acceptor to an excited state $S_1$, resulting in fluorescent emission by the acceptor fluorophore.

Generally, the acceptor fluorescence increases in the presence of donor, whereas the donor fluorescence decreases in the presence of the acceptor. The ratiometric change of fluorescence intensity can then be used to measure the FRET. This is the most straight-forward approach to measuring the process of the FRET. It is generally possible to determine existence and level of FRET events from the change in the emission of the donor or the acceptor. The major parameter that is used to quantify in detection of FRET events the FRET efficiency *E*, which is basically the number of excited donors that transfer the energy to the acceptor, divided by the number of photons absorbed by the donor. So, this is basically a fraction of donors that transfer their energy to the acceptor. The FRET efficiency *E* can also be expressed as the following ratio:

$$E = \frac{R_0^6}{R_0^6 + r^6}$$

where $R$ is the Förster radius (typically in the order of nanometres) that represents the distance between the donor and acceptor at which the FRET efficiency is 50% (when half of the excited donor molecules transfer their energy to the acceptor), and $r$ is the distance between the donor and acceptor. Since it is $r^6$, it makes the dependence very steep. So, measuring the FRET efficiency $E$ allows to assess the distance $r$ between the donor and acceptor. Generally, the present technique may utilize selective activation of very few of the fluorophores (e.g. few donor fluorophores) to enable single molecule detection and thus determine the donor-acceptor distance r from the level of donor emission modulation.

**Fig. 1C** shows an example of the excitation spectra **Ex1** and **Ex2** (dashed line) and emission spectra (solid line) **Em1** and **Em2** of exemplary donor and acceptor fluorophores respectively. As shown, the spectrum lines are at least partially overlapping forming spectrum regions associated with direct acceptor excitation by the donor excitation and donor bleed through into the acceptor detection wavelength range. These overlapping spectra introduce crosstalk between donor and acceptor excitation and emission wavelengths that limit direct detection accuracy. The crosstalk between excitation and emission wavelength of the donor and acceptor fluorophores may typically prohibit, or at least significantly limit accuracy of, detection of single FRET events (separated donor-acceptor interactions) over a large background of non-interacting donor or acceptor fluorophores, using the traditional FRET measuring approaches (e.g. via sensitized emission). An alternative in the conventional technique utilizes lower fluorophores' density (i.e. low amounts of donor and acceptor fluorophores) providing fluorophores' density at a level enabling single molecule detection. The present technique however, allows detection of single FRET events in densely labelled samples, without the need to dilute the donor and acceptor densities. To this end the present technique may generally utilize detection of shifts between frustrates and non-frustrated FRET events, while typically utilizing fluorophore that are switchable between on and off states.

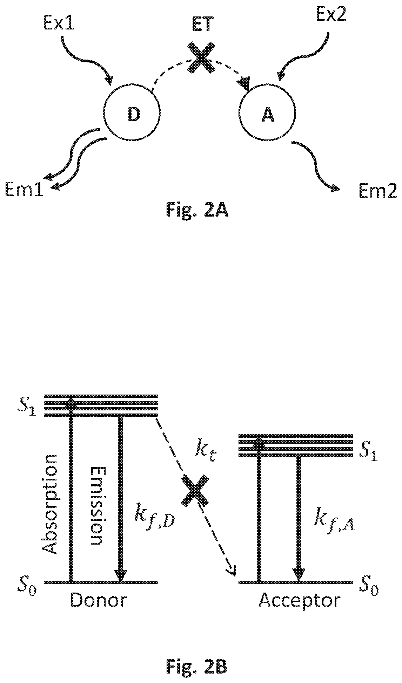

**Figs. 2A-2B** shows an example of frustrated (interchangeably used with the term "saturated") FRET events/process. **Fig. 2A** exemplify excitation **Ex1** of the donor **D** simultaneously with excitation **Ex2** of the acceptor **A** such that the energy **ET** from the donor **D** cannot be transferred to the acceptor **A** since it is already excited. This result in donor emission **Em1** and acceptor emission **Em2,** where the donor emission is not reduced by energy transmission **ET. Fig. 2B** schematically illustrates the energy levels and the transitions therebetween in frustrated FRET process, marked by blockage of energy transmission between the donor and acceptor. As can be appreciated the energy transfer from an excited state of the donor to the acceptor is not permitted as the acceptor is saturated.

Fluorophores suitable for being used in the technique of the present disclosure may include, but are not limited to generic or proprietary emitters listed in **Table 1** below:

*Table 1. Generic or proprietary exemplary emitters suitable for use in the present disclosure*

| Type 1 | Fluorescein and derivatives thereof, Rhodamine and derivatives thereof, Cyanines and derivatives thereof, Coumarin and derivatives thereof, Xanthene derivatives, Squaraine derivatives, Naphthalene derivative, oxadiazole derivatives, Anthracene derivatives, Pyrene derivatives, Oxazine derivatives, Acridine derivatives, Arylmethine derivatives, Tetrapyrrole derivatives, Alexa Fluor® dyes, DyLight Fluor® dyes, Cyanine Cy™ dyes, ATTO® dyes, Abberior STAR® dyes, Dyomics® dyes, DNA fluorescent stains (for example, DAPI or 4',6-diamidino-2-phenylindole), membrane fluorescent stains (for example, DiI or DiIC$_{18}$(3), DiO or DiOC$_{18}$(3), DiD and DiR, which constitute a family of lipophilic fluorescent stains for labelling membranes and other hydrophobic structures). |
|---|---|
| Type 2 | A subset of Type 1 emitters that can be used for SMLM (dSTORM), for example, Abberior fluorophores, Alexa fluorophores (Alexa Fluor® 488, Alexa Fluor® 555, Alexa Fluor® 568, Alexa Fluor® 647, Alexa Fluor® 750, Alexa Fluor® 790), Atto fluorophores (ATTO® 488, ATTO® 520, ATTO® 565, ATTO® 647, ATTO® 647N, ATTO® 655, ATTO® 680, ATTO® 740), Bella fluorophores, Bodipy, Cy fluorophores (Cy2, Cy3, Cy3B, Cy3.5, Cy5, Cy5.5, Cy7), DyLight fluorophores (e.g. DyLight Fluor® 750), Everfluor fluorophors, Fluorescein Isothiocyanate (FITC), Dyomics® 654 and IRDye® 800CW, HiLyte fluorophores, Seta fluorophores, Quasar and Cal Fluor dyes, SureLight Dyes, APC, APCXL, RPE, BPE, Vio Dyes. These dyes may change their fluorescent properties upon changes in the polarity of their environment. |
| Type 3 | Fluorescent proteins may include, but are not limited to, CFP, CyPET, GFP, YFP, YPET, RFP, and their mutants. |

(continued)

| Type 4 | Photoactivatable or photoswitchable fluorescent proteins include, but are not limited to, PAGFP, Dronpa (and mutants such as Dronpa2, Dronpa3, Padron), rsFastLime, PAmCherry (and mutants PAmCherry1, PAmCherry2, or PAmCherry3, reCherry, rsCerryRev), PS-CFP1, PS-CFP2, Dendra1, Dendra2, Kaeda, KikGR, mKikGR, EosFP, mEos2, and KFP1. |
|--------|---|
| Type 5 | Quantum dots, quantum rods. |
| Type 6 | Quenchers, for example the DYQ series by Dyomics®, Black Hole Quencher Dyes by BioSearch Technologies®, and the QSY series by ThermoFisher Scientific®. |
| Type 7 | Caged fluorophores that can include, but not limited to, fluorophores that become fluorescent upon illumination with UV light. |
| Type 8 | Bioluminescent emitters may include, but are not limited to, Luciferase derived chimeras. |
| Type 9 | Chemiluminescent emitters. |
| Type 10 | Phosphorescent emitters may include, but are not limited to, lanthanides with or without sensitizers. |
| Type 11 | Nano diamonds |

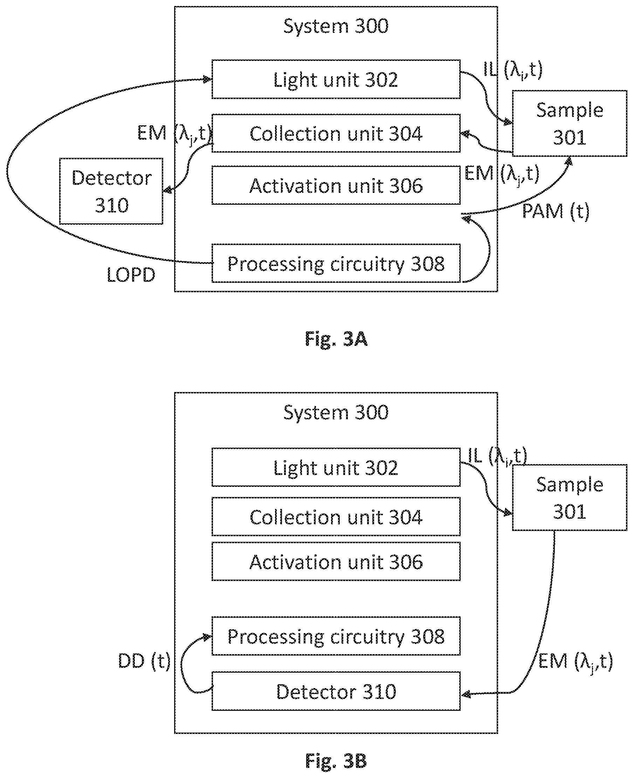

**Figs. 3A-3C** show block diagrams exemplifying selected embodiments of the system of the present disclosure. **Fig. 3A** shows a system **300** that includes a light unit **302** that is configured for providing a selected temporal profile of illumination $IL(\lambda_i, t)$ of at least two different wavelength ranges towards a sample **301** for excitation of selected donor and acceptor fluorophores. The system further includes an activation unit **306** (e.g. photoactivation or chemical activation) for providing a desired temporal profile of activation means **PAM(t)** for selectively switching population of fluorophores in the sample **301** between active and inactive states. The selected population of fluorophores may be a selected portion of either the donor or the acceptor population. In some embodiments, the activation unit **306** is configured to provide activating means for activating a relatively small portion of the donor fluorophores population. The means of activating may be selected, for example, from chemical or optical means. Generally, the activation unit 306 is adapted to provide one or more activation signals, e.g. illumination pulse in activation wavelength range, drop of solution with activation chemicals, etc. The activation signal is typically selected to be very weak, to allow activation of only a few of the donor fluorophores, e.g. effectively activate up to 1 or up to 10 fluorophores within a region of a size associated with diffraction spot of the optics used in the sample of fluorophores (possibly of the order of $10^{18}$-$10^{23}$ fluorophores in the sample). For example the activation signal may be sufficiently weak, as having activation probability of 1:$10^{10}$ to 1:$10^{23}$ of fluorophores.

A collection unit **304** of the system is configured for collecting the light emitted from the sample $EM(\lambda_j, t)$ over time, in response to illumination $IL(\lambda_i, t)$. The collection unit **304** is further configured to direct the emitted light $EM(\lambda_j, t)$ towards a detector **310** that may be part of the system **300** or external thereto. To this end, the collection unit **304** may include at least one spectral filer and one or more imaging lenses forming an imaging lens arrangement. The spectral filter is typically selected for transmitting light of third wavelength range (typically associated with emission of the donor fluorophores) for detection. The imaging lens arrangement (optical arrangement) may be configured for imaging one or more selected planes within the sample onto an image detection plane (e.g. where a detector unit is positioned). In some configuration, the collection unit is configured for general light collection, while not providing spatial image of the region of the sample, allowing detection of variation intensity of light emission from the donor fluorophores. The system may also include a processing circuitry **308,** being integral part of the system or provided by an external processing circuitry (e.g. computer system). The processing circuitry **308** may be configured for transmitting light unit operational data **LOPD** for operating and controlling the light unit **302** to provide the desired illumination profile $IL(\lambda_i, t)$, and transmitting activation unit **306** operational data **POPD** for operating and controlling the photoactivation unit **306** to obtain the desired profile of photoactivation means **PAM(t).** The desired illumination profile $IL(\lambda_i, t)$ includes at least a desired intensity-modulated illumination profile suitable for exciting acceptor fluorophore in the sample at a selected known pattern.

**Fig. 3B** includes all the elements of **Fig. 3A,** therefore the description of the figure includes merely the additional/different elements with respect to **Fig. 3A.** In **Fig. 3B** the system **300** includes a detector **310** that is configured to detect the light emitted from the sample $EM(\lambda_j, t)$ and to generate detection data **DD(t)** indicative of the intensity profile of the emission over time. The detector **310** is further configured to transmit the collected data **DD(t)** on intensity variations to the processing circuitry **308** for processing thereof and identifying FRET events therein. As indicated above, the collected data may include general intensity variations, or be in the form of image data pieces providing spatial distribution of intensity emitted from fluorophores in the sample and variation thereof.

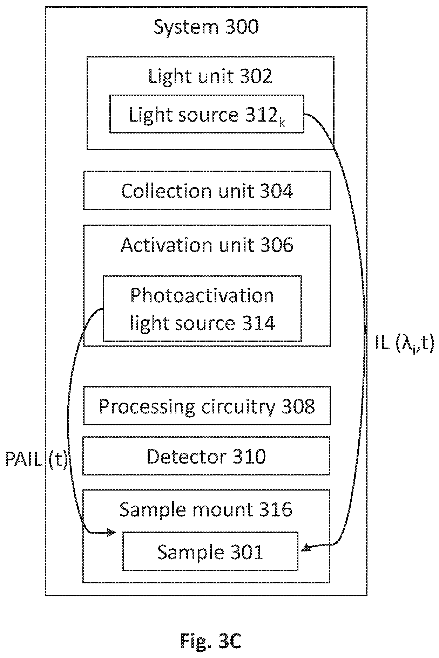

**Fig. 3C** includes all the elements of **Fig. 3B,** therefore the description of the figure includes merely the additional/different elements with respect to **Fig. 3B.** In **Fig. 3C,** the light unit **302** includes one or more light sources $312_k$ (e.g. two or three light sources), each light source $312_k$ is configured to illuminate light of a selected different

wavelength **IL($\lambda_i$, t)** suitable for exciting different fluorophores. Typically, the light unit **302** may include first light source for the donor exciting wavelength and second light source for the acceptor exciting wavelength. In this embodiment, the activation unit **306** includes a photoactivation light source **314** configured for providing a photoactivation illumination **PAIL(t)** suitable for switching desired population of fluorophores from non-active state to photoactive state, namely to a state in which they can exhibit fluorescence. The illumination provided by of the light unit **302** and the by photoactivation unit **306** is directed towards a sample **301** generally positioned on (or in) a selected sample mount **316** defining location of the sample and may be configured for holding the examined sample **301**.

In any of the embodiments exemplified in **Figs. 3A-3C,** the processing circuitry may be configured for receiving and processing the detection data **DD(t)** (being image data and/or general intensity data) detected by the detector for identifying a FRET event. Generally, the system **300** as described herein may be operated in accordance with one or more detection schemes. In some embodiments, the activation unit **306** is operated to provide low activation signal (e.g. very low illumination intensity for photoactivation, or small amount of activation chemicals) to switch only a few of the fluorophores to active state. The light unit **302** operates the respective light sources **312$_k$** thereof, to provide illumination of a first, donor excitation, wavelength range and a second, acceptor excitation wavelength range, while the second, acceptor excitation wavelength range is modulated in a selected modulation profile. The collection unit **304** and the detector **310** are operated together for collecting temporal variations in emission of light associated with donor fluorescent wavelength (donor emission) and transmit data on collected light to the processing circuitry **308**. The processing circuitry **308** is generally operated for processing of the collected signal. Generally, the processing is directed to identify, in the collected data of the donor emission signal, modulation profile corresponding to the modulation of illumination of the second, acceptor excitation, wavelength range. Detection such matching modulation and the intensity thereof indicates potential frustrated FRET events in the sample, associated with the sought molecular structure that allows nearby binding of the donor and acceptor fluorophores. The detection of the FRET events may generally be performed by selecting one more time windows in the detection data, associated with activation of the fluorophores by the activation unit **306,** and analyse the data in these windows to identify variation of the intensity of the emission of the donor matching to the selected intensity-modulated illumination profile.

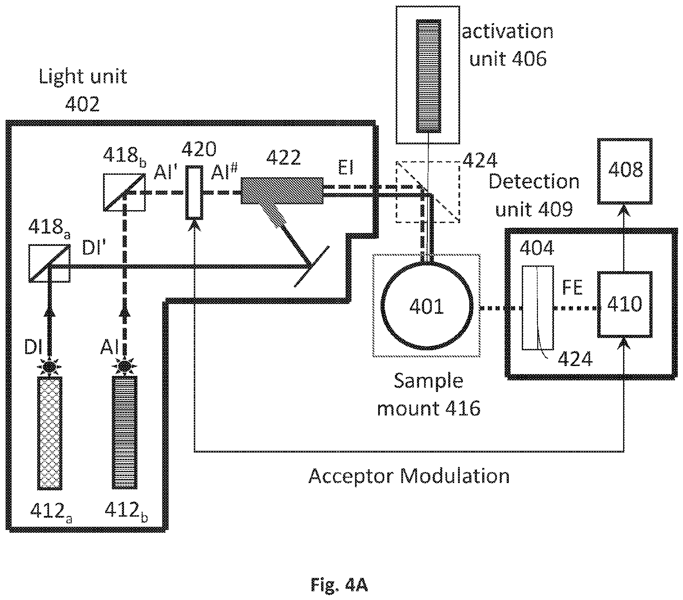

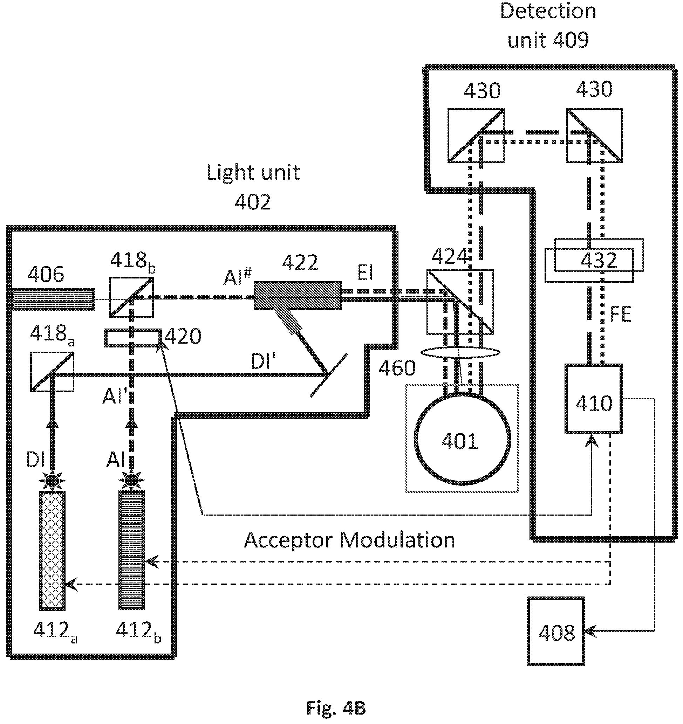

In the figures throughout the application, like elements of different figures are given similar reference numerals shifted by the number of hundreds corresponding to the number of the respective figure. For example, elements **402 in Figs. 4A and 4B** serve the same function as elements **302 in Figs. 3A-3C.**

**Figs. 4A-4B** are schematic illustrations of non-limiting examples of embodiments of the system of the present disclosure. **Fig. 4A** shows a system (e.g. fluorimeter system) that includes a light unit **402** configured for illuminating a sample **401,** and a detection/collection unit **409** configured for collecting and detecting optical emission from the sample, activation unit **406,** and a processing circuitry **408** operable for processing the collected data. The light unit **402** includes a first donor light source **412$_a$** and a second acceptor light source **412$_b$** for providing respectively illumination of first wavelength range **DI** suitable for excitation of selected donor fluorophores, and illumination of a second wavelength range **AI** suitable for exciting acceptor fluorophores. For example, the system may include donor and acceptor monochromators/spectral filters **418$_a$** and **418$_b$** for filtering the illuminations to obtain illumination of relatively narrow wavelength range, e.g. monochromatic donor illumination **DI'** and monochromatic acceptor illumination **AI'**, respectively. Generally, such monochromators may not be used, when the light unit **402** utilizes monochromatic light sources **412$_a$** and **412$_b$** such as laser light sources. Light of the second wavelength range **AI** is modulated, e.g. by an acceptor modulation unit **420,** or directly by modulating operation of light source **412$_b$**. the modulation generally includes a desired temporal acceptor illumination intensity profile **AI$^{\#}$**. For example, light unit **402** may operate to provide pulsed illumination of the second wavelength range, having selected pulse rate or selected profile of pulse train. The modulation may include variation profile of the intensity of illumination in the second wavelength range used to excite the acceptor fluorophores in the sample.

The light provides by first and second light sources **412$_a$** and **412$_b$** is further directed toward the sample, e.g. via beam combiner **422** configured for combining the two illuminations into a single excitation beam **EI** and directing it, e.g. using one or more optical elements, towards the sample **401** generally located on (or in) sample mount/chamber **416.**

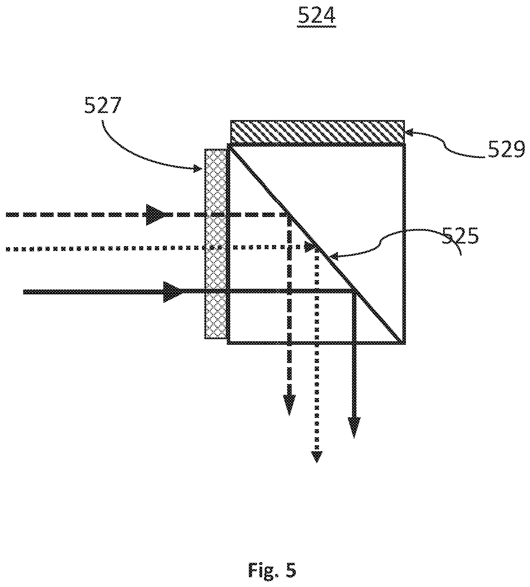

The system may include a filter cube **424** (shown in a dotted line in the figure). A non-limiting example of a configuration of a filter cube is shown in **Fig. 5.** The filter cube **524** includes a two-channel dichroic mirror **525,** an excitation filter **527,** and an emission filter(s) **529** having one or two transmission windows. In some embodiments, the filter cube includes merely the two-channel dichroic mirror to direct the modulated dichromatic excitation light beam to the sample chamber.

The detection/collection unit **409** generally includes a collection arrangement **404** and detector **410**. The collection arrangement **404** (e.g. optical arrangement and selected wavelength filters) configured to collect light associated with emission of the fluorophores **FE** from the sample and direct it towards the detector **410,** which in turn is configured for detecting the emitted light of the fluorophores and generating detection data pieces indicative of the intensity profile over time of the donor emission with a selected sampling rate. The collection arrangement includes one or more wavelength selective filters **424** positioned to filter collected light enabling detection of only selected wavelength range. Generally, the wavelength selective filter **424** is selected to allow collection of wavelength range associated with emission of the donor fluorophores (**Em1**). The collection arrangement **404** may include one or more imaging lenses for imaging a selected region of the sample onto an image/detection plane (where the detector **410** is positioned. In some configurations, the collection arrangement may be configured to integrate collected emission from the sample, thereby transmitting general intensity data to the detector **410,** not specifically associated with image of the sample. The processing circuitry **408** is configured to receive data on the collected emission intensity over time and to process it to identify one or more FRET events therein. In some configuration the collected data may be in the form of detection data enabling processing of selected regions in the sample, in some other configuration the collection field of view may be limited, to allow collection from relatively small region of the sample, providing effectively single detection point. The detector sampling rate may be synchronized with modulation of the second wavelength range **AI#**, to provide sampling rate providing Nyquist condition for sampling (i.e. being at least double the fastest frequency of modulation of the second wavelength range).

The activation unit **406,** exemplified herein as optical activation unit **406** is configured to provide selective activation signal to the sample, to activate small portion of the fluorophores in the sample, thereby enabling single molecule detection. As indicated above, the activation unit **406** may utilize an activation light source providing optical illumination (e.g. UV or blue wavelength, or any wavelength range suitable for activation of the selected fluorophores in the sample) to cause photoactivation of at least the donor fluorophores in the sample. In some configurations, the activation unit **406** may utilize a drip providing small amounts of chemical reagents to provide chemical activation of the fluorophores. In some configurations, the system may not include a physical activation unit **406,** but may include instructions indicative of activation protocol of the fluorophores to enable activation of small amount of the fluorophores in accordance with single molecule localisation microscopy (SMLM) techniques.

As indicated above, the present technique may operate by illumination a region of the sample and collecting detection data pieces of the illuminated region, thereby performing field detection of FRET events in the sample. This configuration allows to localize the detected FRET events and thus determine location of the respective molecular structure that allow nearby binding of the donor and acceptor respective probes. In some other configurations, the system of the present technique may be configured to operate in a confocal microscope configuration, i.e. utilize an objective lens for directing the exciting (and activating) illumination onto a small point in the sample, and collect light smutted for the respective small point. This configuration allows scanning of the sample and may provide high resolution data, typically at the cost of time, alternatively, the confocal detection volume may remain stationary and molecules are replaced within through diffusion or flow.

To this end, Fig. 4B shows an exemplary configuration of the system of the present disclosure in the form of microscopic system allowing microscopy functionality and may operate for wide-field microscopy and/or as confocal microscope system. This configuration differs from that of Fig. 4A by that the collection unit includes guiding optics 430 and an emission filter 432 configured to transmit light associated with emission of the donor fluorophores or donor and acceptor emission in a sequence towards the detector 410, and optical lens 460 (e.g. objective lens unit) focusing the light and providing collection of light from a selected focal point in the sample 401. Furthermore, in this embodiment the filter cube 424 may be configured to receive and transmit the illumination of the two wavelength ranges to the sample chamber 416 and to filter out the emitted light from the sample and to transfer it to the detection unit 409. It should be noted that the activation unit 406 is not specifically shown herein, but may typically be used to provide optical activation, chemical activation or other activation techniques, to small amount of the fluorophores enabling single molecule localization microscopy techniques. In some configurations the use of confocal microscopy enables monitoring while not requiring selective activation of the fluorophores, this is partly due to the small region being inspected, that reduced the amount of fluorophores within the region.

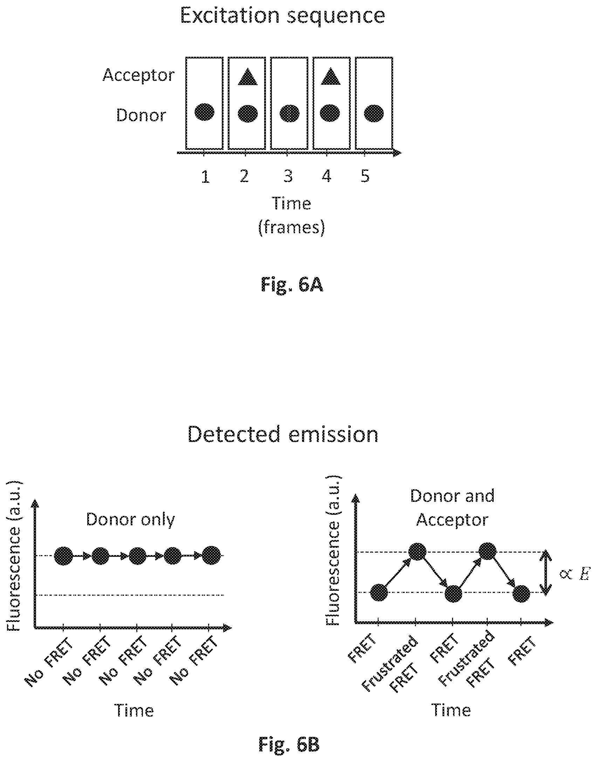

Reference is now made to **Figs. 6A-6B** schematically demonstrating the excitation illumination sequencing during the imaging according to the present technique. **Fig. 6A** exemplifies modulated excitation of both the donor and the acceptor as a series of pulses over time, donor pulses are marked by cycle and acceptor pulses are marked by triangles. During monitoring/ imaging the donor light source for donor excitation may operate continuously or by pulses to provide illumination within consecutive frames. The acceptor excitation light source is modulated, e.g. effectively providing illumination within alternate frames. **Fig. 6B** schematically shows that for a FRET donor-acceptor pair, the frustrated FRET caused by the acceptor-modulated excitation, results in modulation of the fluorescence emission intensity of the donor. The intensity difference between the frames with the frustrated FRET and with the regular FRET is linearly related to the FRET efficiency.

As seen in **Fig. 6B,** for a donor-only sample (e.g. when no acceptor fluorophore is close enough to any given donor fluorophore), no change in the donor intensity is detected. Modulating the excitation of the acceptor fluorophore in a known frequency domain, for example in alternate frames as shown in **Fig. 6B,** while the donor is excited, lead in turn to synchronised modulation in the emission intensity of the donor. This process makes it possible to use lock-in detection in order to differentiate between donor molecules that were part of the FRET pair and those that were not.

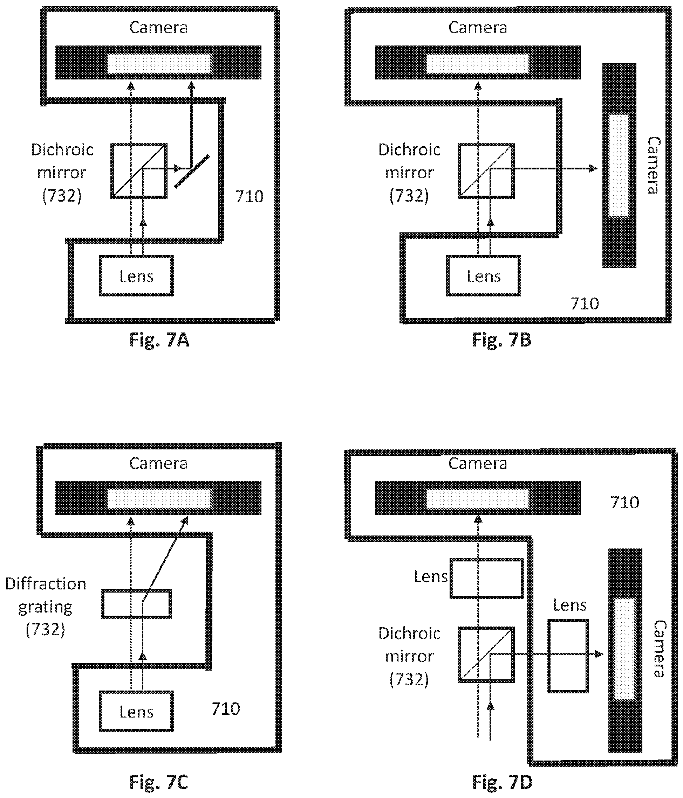

Reference is now made to **Figs. 7A-7D,** which are schematic illustrations of non-limiting embodiments of four different configurations of the detection unit, in particular the configuration of the collection unit with respect to the detector, when configured to allow detection of donor and acceptor emission light. As shown, the collection unit 710 in these examples utilizes a dichroic mirror or diffractive grating, configured to direct light of wavelength range associated with donor emission to one detector (or a portion of a detector) and light of wavelength range associated with acceptor emission to another detector (or another part of the detector), thereby enabling to differentiate between donor and acceptor emission. It is to be noted that the processing circuitry may be in data communication with the light sources of the donor and acceptor to control their operation to obtain the desired illumination profile. In some embodiments, the detector and the processing circuitry are components of a mobile device, e.g. a smart phone or a tablet having suitable detection capabilities and computing power. The processing circuitry may transmit the results of the measurements to an external memory, which can be a mobile device (such as a smartphone), desktop computer, server, remote storage, internet storage, or diagnostics cloud.

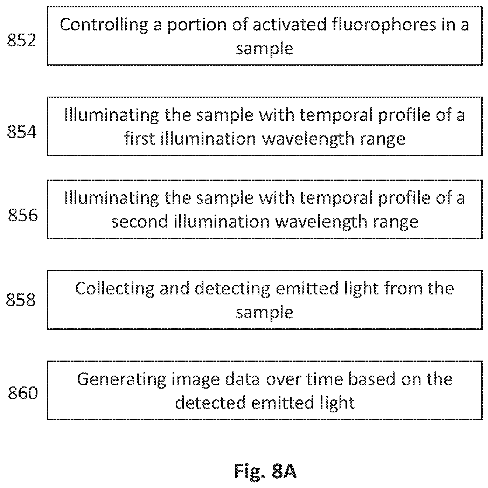

**Figs. 8A-8C** are flow diagrams of non-limiting examples of embodiments of the method according to an aspect of the present disclosure. **Fig. 8A** exemplifies a method that includes controlling a portion of activated (e.g. photoactivated) fluorophores in a sample **852.** This can be performed by providing selected activation signal utilizing activation means such as illumination suitable for photoactivation, adding reactants to the sample to react with the fluorophores to activate them, or by passive means, namely by controlling the number of fluorophores in the sample that perform spontaneous photoactivation. By controlling number and/or density of the fluorophores, the sample can be designed such that at any time a desired relatively low number of fluorophores are photoactivated to allow single molecule localisation microscopy (SMLM) by using FRET techniques according to the present disclosure. For example, at any time, the number of active fluorophores (e.g. donor fluorophores) is sufficiently low to provide single molecule detection. The activation means are selected according to the fluorophores in the sample. Each type of fluorophores may be activated with a different approach, namely optic-based, chemically-based or spontaneous photoactivation. Generally, the portion of activated fluorophores may be in the order of one to several billion, one to trillions, or one to $10^{20}$ or more. Typically, the fluorophores may be activated in response to a selected activation signal. The activation signal is selected to be sufficiently weak so as to activate a very small amount of the fluorophores, providing a few single fluorophores in the sample being in active state. This can be done by providing very low intensity of optical activation, or very small amount of chemical reagents for chemical activation.

The method further includes illuminating the sample with a selected temporal profile of a first illumination wavelength **854** (e.g. continuous illumination, series of pulses etc.) suitable for excitation of donor fluorophores and a selected temporal profile of a second illumination wavelength **856** suitable for excitation of acceptor fluorophores. The temporal profile of the second illumination wavelength is different than the modulation of the first wavelength range, and is selected to provide clear variation in excitation of the acceptor fluorophores for similar excitation level of the donor fluorophores between sampling events. The illumination profiles are selected to result in a variation of the emission of the donor fluorophore over time in correlation to the second illumination profile. The acceptor is alternately saturated to alternately block the FRET process (frustrated FRET).

The method further includes collecting and detecting the emitted light from the sample **858** and generating sampling data (e.g. detection data sequence) indicative of the variation of the intensity of the detected light over time **860.**

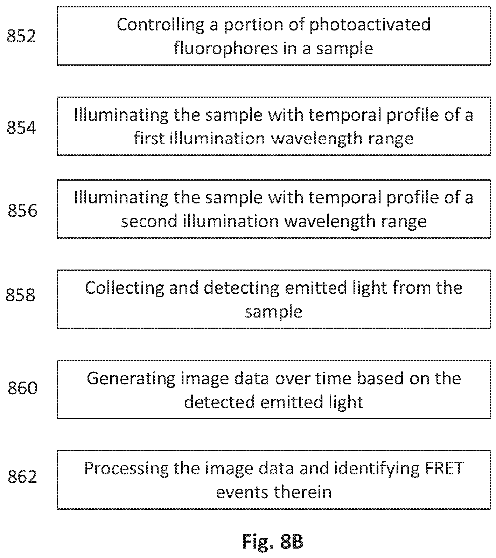

**Fig. 8B** is another example of the method that differs from that of **Fig. 8A** by including processing the detection data and identifying FRET events therein **862.** The processing may include identifying sequences of sampling events following activation of a portion of the fluorophores in the sample, and identifying within such one or more sequences, variation in donor emission associated. The variation of donor emission is compared to the modulation of second acceptor excitation illumination, to indicate frustrated FRET events. For example, frequencies of the detected variation in donor emission may be compared to frequencies of modulation of the (second) acceptor exciting illumination within the relevant time windows. Analysing the relevant frequencies within time window, to determine correlation between the modulation frequencies of the detected emission and the temporal profile of the illumination of the second wavelength range, provides data indictive of FRET event and may include data on amount of such events, their location, and distance between the donor and acceptor in each event (based on intensity of the modulation). It is to be noted, that the analysis may also include determining the FRET interaction distances of each FRET event.

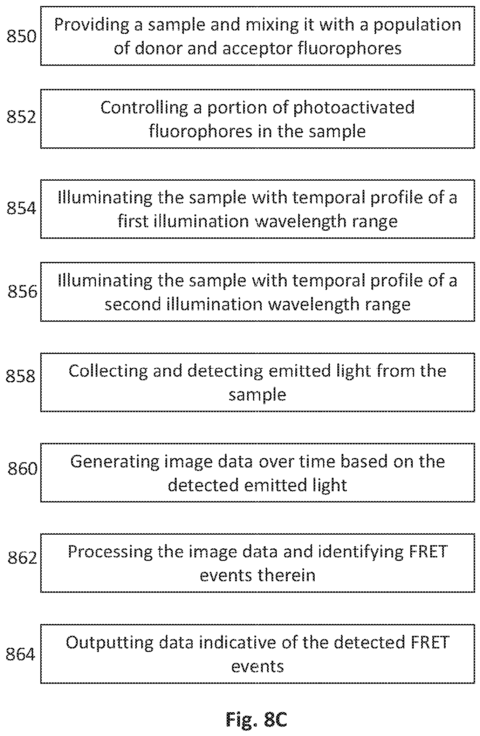

The example of **Fig. 8C** differs from that of **Fig. 8B** by including providing a sample and mixing it with a population of donor and acceptor fluorophores **850.** As indicated above, the fluorophores are generally associated with molecular probes having affinity for bonding with selected molecular entities/structures (e.g. sequences) in the sample. The donor and acceptor fluorophores are adapted for association with binding sites of substances in the sample. The association with the selected binding sites may be specific to selected binding sites (using predetermined chemistry or recognition) or non-specific binding that may be through adsorption of the molecules to the substance on any of multiple possible sites.

The fluorophores are associated with the probes selected to be suitable for identifying specific substances in the sample. For example, the fluorophores may be associated with probes suitable for binding to binding sites of a substance, such that upon binding of the donor and acceptor to the target binding sites, a FRET interaction may be occurred and identified. The example of **Fig. 8C** further includes outputting output data **864** indicative of the detected FRET events and/or their parameters, e.g. interaction distances.

It is to be noted that the method of the present disclosure may be obtained by any combination of method elements described in any of the embodiments in **Figs. 8A-8C.**

The inventors have conducted experimental research for improving and validating the present technique.

## *EXAMPLES*

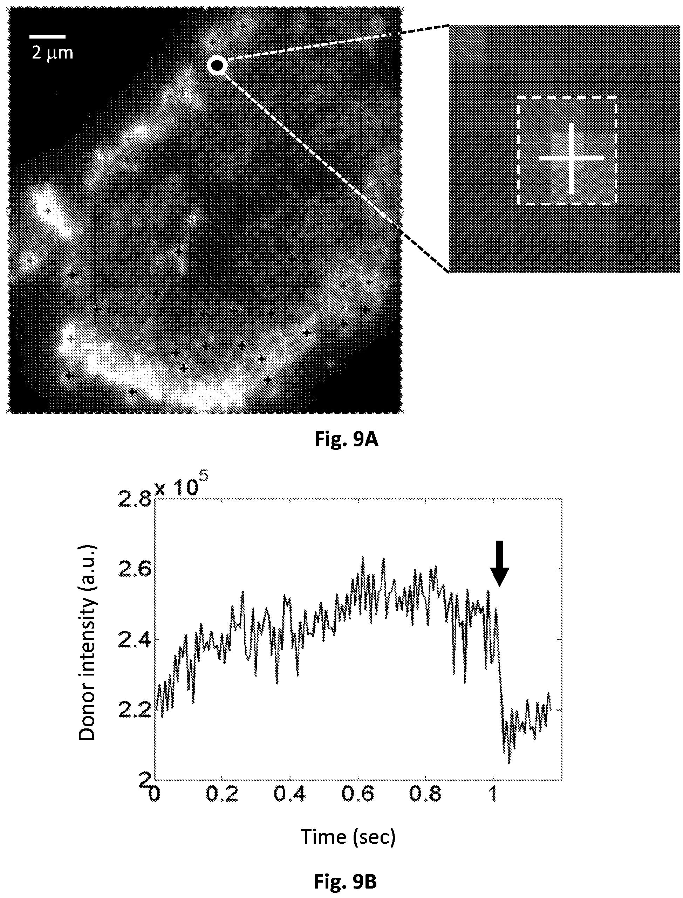

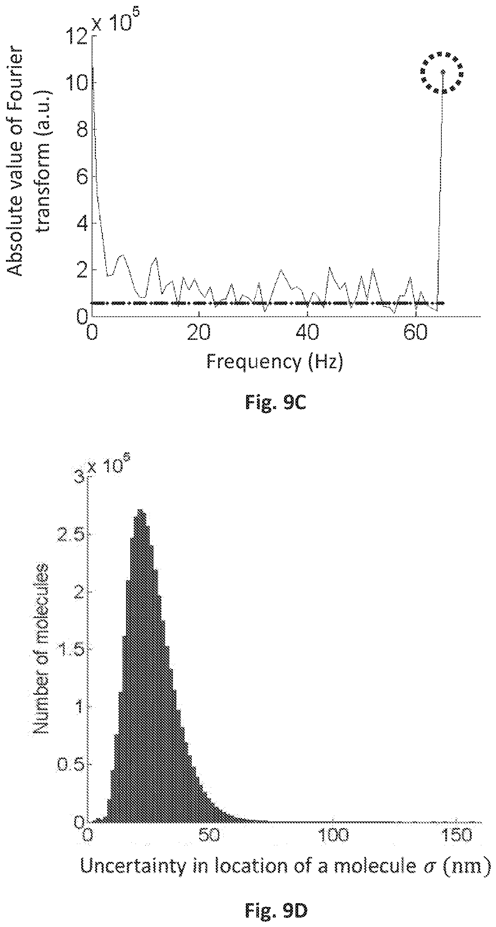

Reference is now made to **Figs. 9A-9D** exemplifying detection of sites of single FRET events in a sample according to the present technique. **Fig. 9A** is one representative frame out of a movie of a cell acquired via an SMLM imaging technique known as direct Stochastic Optical Reconstruction Microscopy (dSTORM). In this figure the PAGFP Actin is conjugated to selected fluorophores (Alexa Fluor® 555 and Alexa Fluor® 647). **Fig. 9B** shows variation in collected donor emission intensity; **Fig. 9C** shows temporal frequencies of the collected intensity variations of **Fig. 9B,** and **Fig. 9D** shows histogram exemplifyign uncertainty in localization of detected molecules. The PAGFP in this example is not initially excited and the emission of Alexa Fluor® 647 is filtered out. The crosses mark the position of single molecules that are localized in the analysis that is done after the imaging. The white square with a black cross in the center marks the position of a single molecule (in the magnified image in **Figs. 9A),** being analysed in **Figs. 9B-9C.** The photons emitted by the molecule are collected from the pixel where the molecule is localised and the eight surrounding pixels.

**Fig. 9B** shows a time trajectory of the fluorescence intensity of the molecule. This molecule was detected over time in 132 consecutive frames. **Fig. 9C** shows the absolute value of the Fourier transform of the time trajectory of the intensity. The dashed circle with a dot in the center indicates the modulation frequency (sampling rate was selected to provide Nyquist frequency with respect to the modulation), the dashed line marks the median of the absolute values of the Fourier transform for all the frequencies. **Fig. 9D** demonstrates the accuracy of the experiment with the number of molecules as a function of uncertainty in location of a single molecule. In this exqample, the frequency data was determined using moving window temporal Fourier Transform on the collected emission intensity. The windowed Fourier transform includes varying time segments, ranging from 8 frames to 208 frames with jumps of 8 frames (i.e. segments with number of frames of 8, 16, 24, etc.) used in the analysis. The Figure of Merit (FOM) for each time segment was calculated and indicated further below. For each detected molecule, the highest FOM is chosen to be the FOM of the detected molecule.

Generally, in SMLM techniques, single peaks are identified in each frame and are grouped over space and time to yield the time-dependent emission of single molecules. The location of the single donor molecules was detected using an "ImageJ plug-in" algorithm

In an exemplary system of the present disclosure, the size of each pixel in the camera was 160 nm. Diffraction limit was about 200 nm and so is the order of the size of the point spread function (PSF). Therefore, the photons that are emitted from a single molecule are also collected by the pixels of the camera that surround the pixel where the emitter is detected. As shown in **Fig. 9A,** the intensity of each emitter molecule in the frame is determined by summing the intensity of the pixel where the molecule is localized and the intensities of the eight surrounding pixels (the grouping distance is set as four times the average uncertainty of all detected peaks).

The signal from peaks are grouped in consecutive frames into time trajectories of molecules, without allowing their disappearance *(i.e.* a gap time of 0). The grouping distance is set as 105 nm, which is four times the average uncertainty of all detected peaks, as clearly seen in **Fig. 9D.** Importantly, ThunderSTORM algorithm is employed throughout the analyses to discriminate detections of single molecules via their single molecule characteristics, namely their spatial and temporal intensity profile (see Fig. **9B),** and their localisation uncertainty (see Fig. **9D).**

A Fourier transform is performed on the intensity time trajectory for every donor molecule. Every donor molecule that is a part of a FRET pair and is at an 'on' state long enough (> 8 frames) had a distinct frequency component at the modulation frequency. In the present case (see **Fig. 9C),** this component is shown as a high peak at the Nyquist frequency on the power spectrum, when compared to the median of the power of all the other frequencies, excluding the 'direct current' (DC) signal (i.e. the signal at 0 temporal frequency).

After determining the grouping distance, the time trajectories of intensities of all individual donor emitter molecules are determined, followed by determining a criterion to distinguish between the molecules that are influenced by the modulation of the acceptor in a FRET pair and those that are not. That is done by defining a figure of merit (FOM) that represented the extent of the FRET process for each donor molecule. The FOM is set as the ratio between the absolute Fourier component at the Nyquist frequency and the median of the absolute Fourier components for all frequencies, except for the DC signal. Larger FOM values indicate higher strength of the modulation of the donor emission relative to the background, and thus, a higher confidence for the existence of a FRET pair. It should be noted that the inclusion of more extended surrounding pixels in the calculation of the intensity per the PSF results in much noisier background, and the effective reduction of the signal to background of the intensity measurement. This is since the acceptor also photobleaches and can be in the "on" state for only some of the time period that the donor is "on", windowed Fourier transform is used in order to calculate the FOM value.

For the frustrated FRET process, the acceptor should be fluorescently active. However, in the present measurements, it is observed that the frustrated FRET process became negligible after about 3.6 sec from the initiation of the measurements, because of acceptor photobleaching (or entering prolonged dark-states). Correspondingly, the frustrated FRET is not effective after that time. Since only the molecules that are emitting while the effect is still significant should be tracked, the focus is made only on the donor emitter molecules that appeared in the first 1.54 sec of each movie (which includes about 210 frames). The signal is grouped from peaks in consecutive frames into time trajectories of molecules, without allowing their disappearance (gap time of 0). As mentioned above, throughout our analyses the ThunderSTORM algorithm is employed to discriminate detections of single molecules via their single molecule characteristics (specifically, intensity and localisation uncertainty), and via their intensity drop to the background level when they disappeared (bold arrow in Fig. 9B). Indeed, the vast majority of detected molecules are outside of the saturated regions and most of the molecules are shown in sparse areas in each frame.

After identifying the donor emitter molecules in FRET pairs, the FRET values are assigned into a particular dSTROM image, and thus created an image that provides information both on the super-resolved locations and the interactions of the molecules. On average, 33 molecules per cell were detected that had the FRET with an acceptor molecule. A Fourier transform then is applied on the time trajectory of the intensity of each molecule separately.

To determine whether a molecule is a part of the FRET pair, the ratio between the power of the frustrated FRET modulation frequency and the median power of all the frequencies is measured. The next step after the threshold is used in order to identify emitter molecules that are part of the FRET pair, is to assign the energy transfer efficiencies E of each molecule to a particular dSTORM image.

In general, a dSTORM image is a super-resolved image which represents all the detected peaks in the form of a Gaussian. The width of every Gaussian is the uncertainty in the location of the molecule. In addition to the super-resolved location of each and every molecule, information about the FRET between single emitters from the image is desired. This means the energy transfer efficiency from the FOM can be evaluated based on the modulation of the donor intensity, as follows:

$$E = 1 - \left[ \alpha_{sat} \left( \frac{I_{sat}^D}{I^D} + \alpha_{sat} - 1 \right)^{-1} \right] \qquad (1),$$

where $I^D$ and $I_{sat}^D$ are the background-subtracted donor intensity values with and without the FRET, respectively, and $\alpha_{sat}$ is the fraction of the acceptors that is undergoing saturation and become FRET incompetent. For an individual FRET acceptor, $\alpha_{sat}$ can also be interpreted as the fraction of time over which the acceptor is saturated (including its occupying time of short-lived and reversible dark states). In the present assay, $\alpha_{sat}$ was a-priori unknown. However, the present ensemble measurements result in the ensemble efficiency E value of 0.26. It was also found that the ratio $(I_{sat}^D)/I^D$ is 1.33, on average (N=10 cells). From these measurements and the above relation for E, it is concluded that $\alpha_{sat}$ is about 1 in the present assay.

The values of $I^D$ and $I_{sat}^D$ are obtained from the emission of single donor fluorophores in the FRET pairs. In order to do that, first, in each time trajectory of donor intensity, the segments, in which the donor was fluorescent and where it abruptly photobleached (or entered a prolonged dark state), are identified. The background is calculated from the segment after photobleaching. The donor intensity with and without acceptor saturation $(I_{sat}^D$ and $I^D$, respectively) is determined by averaging the intensity just before photobleaching, guided by the windowed Fourier analyses and by subtracting the background. This stage also assists in the exclusion of erroneous data that passes the FOM test.

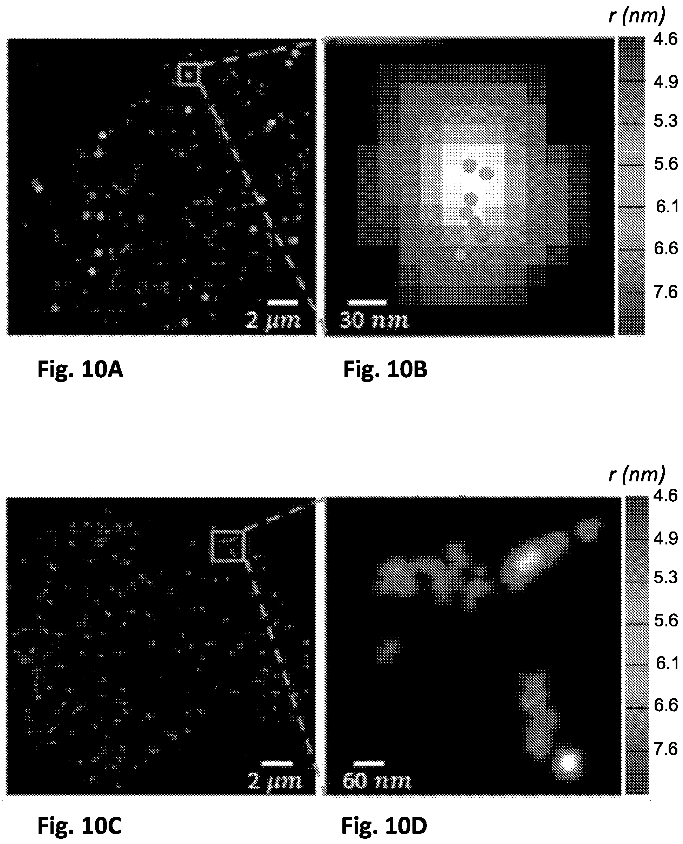

Reference is now made to **Figs. 10A-10F** showing two STORM images and corresponding magnification of selected target and respective detection histograms. The image in **Fig. 10A** is for 'donor-acceptor', **Fig. 10B** shows magnification of a selected area of **Fig. 10A**, **Fig. 10C** shows 'donor only' field and **Fig. 10D** shows magnification of the selected region. In these images, the *E* values are assigned to the molecules that were detected as part of a FRET pair using a colour code (on right). The rest of the molecules that are detected in the cell, but are not part of FRET pairs, are not assigned with an E value. Note that the radii of the coloured discs representing individual FRET pairs are chosen to highlight the existence of multiple overlapping pairs in clusters (see the zoom in **Figs. 10B** and), and do not represent the localisation errors of these pairs.

In the full cell image (see **Fig. 10A),** the spots indicating emission from the individual pairs strongly overlap. The pixel size of the images demonstrated in **Figs. 10A-10D** is 32 nm, which means that the resolution of the image is five times higher than the one that the camera provided. The bright pixels in all images represent identified emitter molecules. These molecules are found in the cell using the super-resolution dSTORM analysis for which no FRET value is assigned. The coloured Gaussians represent molecules for which the FOM is larger than the threshold of 4.5. The Gaussians with the assigned FRET is overlaid on top of the other molecules. The colour bars represent the energy transfer efficiency *E* calculated.

In the present example, we detected 47 molecules that had FRET interaction with an acceptor. **Figs. 10B and**

**10D** show magnifications (zoom) of the corresponding pixels framed in **Figs. 10A and 10C.** In **Fig. 10B,** three different molecules having different E values were detected under the magnification. The dSTORM-FRET image of a cell with the donor fluorophore only is shown in **Fig. 10D.** Only two molecules are detected in this cell, both are the false positive detections.

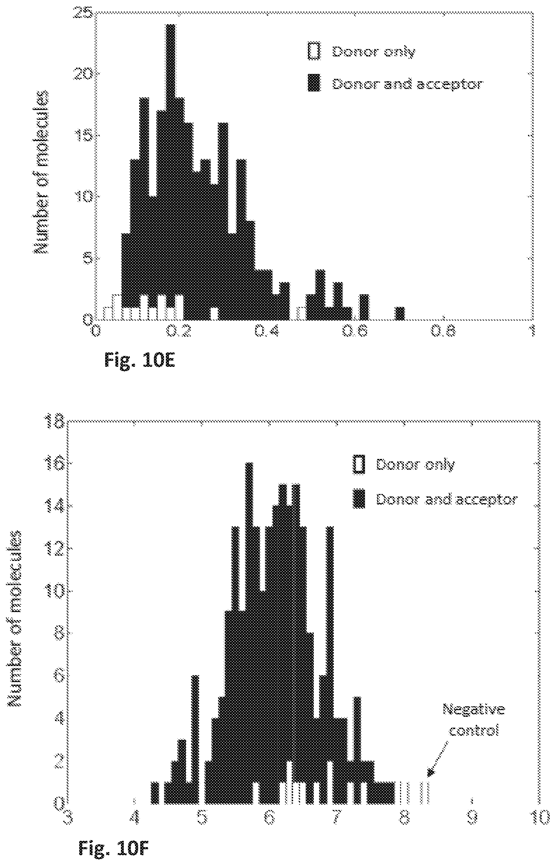

In **Figs. 10A-10D,** the E values are assigned to the emitter molecules that are part of the FRET pair. The rest of the emitter molecules that are detected in cell are not assigned with any E value. Reference is now made to **Figs. 10E-10F** showing the histogram of E **(Fig. 10E)** and the histogram of the distance distribution **(Fig. 10F)** calculated according to the first model for 18 cells having the donor and acceptor fluorophores. While the ensemble FRET measurements yield the average E and distance distribution, the use of single molecule FRET detection as described herein provides detailed information about the distribution for each detected site of a FRET event. Indeed, the FRET efficiency E values are not similar for all molecules and in the example of **Fig. 10E** range from 0.08 to 0.7. The average E value of the 18 cells was 0. 260±0.018.

The ability of single molecule measurements to recover the ensemble averaged measurements is a critical test for the validity of the single molecule measurements. Indeed, it is noted that the average efficiency E value obtained by the dSTORM-FRET combined method of the present invention is within the error of the average E value of 0.226±0.040 found by the ensemble FRET measurements (for 10 cells).

The intermolecular distances between the donor and acceptor are determined from the measured FRET efficiency values. **Fig. 10F** shows the histogram of the intermolecular distance between the donor and the respective nearest acceptor, r. This data is calculated according to a nominal model of the physical system for 18 cells labelled with donor and acceptor fluorophores. The distance r ranged between 4 and 8nm and averaged at 6.05±0.04 nm, as seen in this figure. The distances are calculated according to the first model with the total 527 emitter molecules in the cells. Heterogeneity in the E values and in the donor-acceptor distances is likely due to differences in the interaction geometry between fluorophore carrying probes and the target molecules, e.g. antibodies.

Thus, the developed method of single molecule FRET detection as described here, exemplified using dSTORM-FRET super-resolution techniques, allows to detect single interactions between primary and secondary antibodies in densely labelled cells. An upper limit to the distance between the donor and the acceptor fluorophore-labelled antibodies is then provided. Thus, for the first time, the present invention made it possible to obtain a super-resolved optical image of a cell in single-molecule detail and then to measure intermolecular distances that continuously span from single Angstroms to Microns.

The Förster theory provides a calculation for the distance between the donor and the acceptor assuming the energy transfer efficiency E is given. In the present assay, the primary antibody carried three donors. However, the present single molecule imaging approach ensures that there is a single donor fluorophore in each localization event under study, as the probability of having two donors in a fluorescent state at the same PSF is kept very low. Since the average number of Alexa Fluor® 647 fluorophores on the secondary antibody is 3 in the present disclosure, hence, the FRET between a single active donor and multiple acceptors may occur simultaneously.

Reference is made to **Figs. 11A to 11F** exemplifying a technique for determining distance between single donor fluorophore and respective (nearest) acceptor fluorophore according to some embodiments of the present technique. **Fig. 11A** exemplifies a model arrangement of single donor **D** associated with a molecular structure in vicinity to three acceptor fluorophores **A. Fig. 11B** is a histogram showing distribution of possible intermolecular donor-acceptor distances. **Fig. 11C** shows scattering graph of energy transfer efficiency and errors of the models in determining E (i.e. $E_{err} = E_{model} - E$) for all of the simulated realisations based on two selected models. **Figs. 11D and 11E** show prediction errors of the two models $E_{M1}$-E and $E_{M2}$-E as a function of E. And **Fig. 11F** exemplifies an error plot for determining donor-acceptor distance.

First, two simple models are considered for the experimental system having a single donor and either a single or two-equidistant acceptors that are placed at the distance of the nearest acceptor, relative to the donor. Second, the experimental system having a single donor and three acceptors (see **Fig. 11A)** was modelled, multiple realisations of the system were simulated, and their distribution of all intramolecular donor-acceptor distances are shows in **Fig. 11B.**

Next, the two simple models are shown in **Fig. 11C** to serve as appropriate bounding cases for the detection of FRET event. From the distribution of the energetic errors, an effective model of the system that provides a nominal estimation for the transfer efficiency of the simulated experimental system is found. This effective model has a single donor and 1.2 equidistant acceptors.

Finally, each of the three models (models with $n = 1$, 1.2 or 2 equidistant acceptors) are translated into estimates of the experimental donor acceptor distance $r_{DA}^{min}$, relative to a modelled $R_0$: $n = 1$, yields the lower bound, $n = 2$ yields the upper bound and $n = 1.2$ yields a nominal estimate of $r_{DA}^{min}$.

For the estimation of donor acceptor distance $r_{DA}^{min}$, the distance between the single donor to the nearest acceptor, two models for the donor-acceptor interactions are used. The first model considers the FRET only between the donor to the single nearest acceptor. The contribution of the two other acceptors to the FRET process is neglected. The second model considers the FRET from the donor to two equidistant acceptors, placed instead of the nearest acceptor in the system. The contribution from the third, more distant acceptor, is neglected. As shown below, these models can serve to place lower- and upper-bounds to the $r_{DA}{}^{min}$ value. For that, the possible geometrical interactions between the primary (donor-carrying) and secondary (acceptor-carrying) antibodies were modelled (see **Fig. 11A**).

The two antibodies were modelled as thin rigid rods of length L=14 nm. This model accounts for the largest possible donor-acceptor distances in the experimental system. The locations of the donor along the primary antibody ($d_1$) and one of the three acceptors along the secondary antibody ($d_3{}^i$, where $i$ = 1, 2, 3) are set randomly along the antibodies' length.

The secondary antibody may bind the primary antibody at any point $d_2$ and at any angle $\theta$ which is proportional to [0, $\pi$] along the primary antibody length. With these definitions, the distance between the donor and any of the acceptors is given by:

$$r_{DA}^i = [(d_1 sin\theta)^2 + (d_2 + d_3 cos\theta - d_1)^2]^{0.5} \qquad (A)$$

To test these models, we simulated 1000 random geometries. The distribution of $r_{DA}{}^i$ is shown in **Fig. 11B**. From these distributions, the effective energy transfer is determined based on the contribution of all of the acceptors ($E_T$) and the energy transfer due to the models $E_{M1}$ and $E_{M2}$, respectively. The contribution of each acceptor causes a relaxation rate of the donor:

$$k_t^i = 1/\tau_o \left(\frac{R_0}{r_i}\right)^6 \qquad (B)$$

The effective relaxation rate due to the multiple acceptors is defined as:

$$k_T = \sum_{i=1}^{n} k_t^i \qquad (C)$$

The sum of all relaxation rates of the donor is:

$$\tau^{-1} = \tau_0^{-1} + k_T \qquad (D),$$

where $\tau_0$ is the lifetime of the donor.

Accordingly, $E$ is given by:

$$E = k_T \tau = \frac{k_T}{\tau_0^{-1} + k_T} \qquad (E)$$

Based on Eq. (E), the $E_{M1}$ and $E_{M2}$ values of Model 1 ($n$ = 1) and Model 2 ($n$ = 2), respectively, are thus reduced to:

$$E_{M1} = \frac{k_t}{\tau_0^{-1} + k_t} \qquad (F)$$

$$E_{M2} = \frac{2k_t}{\tau_0^{-1} + 2k_t} \qquad (G)$$

**Figs. 11C-11E** showing the prediction errors of the two models $E_{M1}$-$E$ and $E_{M2}$-$E$ as a function of $E$. It is noted that Model 1 yields a 100% lower bound of $E$, while Model 2 yields a 95% upper bound of $E$. Distribution of 50% positive and negative errors of the predicted E value requires a model where $n$ = 1.2. This model can now effectively replace the quantitative description of the present experimental system and serves as a baseline for the estimation of bounds to $r_{DA}{}^{min}$, as explained below.

The estimates for $E$ are now translated into estimates for donor-acceptor distance $r_{DA}{}^{min}$. For Model 1, in order for a single acceptor fluorophore in this model to provide the measured (or simulated) energy transfer efficiency $E$, one needs to place it at a distance $r_{DA}{}^{M1}$ that is closer to the donor than in reality or in the simulations. Recall that the real (or simulated) system is now represented by a single donor and $n$ = 1.2 equidistant acceptors, located at $r_{DA}{}^{min}$. This is now chosen as a system of reference. Thus, the relation $r_{DA}{}^{M1} \leq r_{DA}{}^{min}$ can be set for 100% of the cases.

In order to determine $r_{DA}{}^{M1}$ in Model 1, the requirement $k_T = k_t$ is equivalent to the contribution of the reference system at distance:

$$r_{DA}^{M1} = (\frac{1}{1.2})^{\frac{1}{6}} r_{DA}^{min}.$$

Conversely, for Model 2, in order for the two equidistant acceptors to provide the measured E, one needs to place them at a distance $r_{DA}{}^{M2}$ that is farther from the donor than in reality or in the simulations. Thus, the relation $r_{MA}{}^{M2} \geq r_{DA}{}^{min}$ can be set in 95% of the cases.

In order to determine $r_{DA}{}^{M2}$ in Model 2, the requirement $k_T = 2kt$ is equivalent to the contribution of the reference system at distance:

$$r_{DA}^{M2} = (\frac{2}{1.2})^{\frac{1}{6}} r_{DA}^{min}.$$

The position of this single acceptor can be interpreted as an effective upper bound on the distance of the nearest acceptor, which holds in 95% of the cases. Considering this as the nominal position of the nearest acceptor $r_{DA}{}^{min}$ yields a non-symmetric error on $r_{DA}{}^{min}$ of -0.03 $\times R_0$ and +0.08 $\times R_0$. (see **Fig. 11F).** Since in the present system, the value of $R_0$ was 51 Å, the obtained distance errors are -1.5Å and +4.5Å.

It should be noted that the present technique, when operated to enable single molecule detection of donor-acceptor FRET event may provide a well-defined system having single acceptor fluorophores in each FRET pair, therefore simplifying processing for determining donor-acceptor distance. In such a case, the errors in $E$ typically excludes the ambiguity in the physical arrangements of multiple acceptors, and will is limited to errors defined by anisotropy of the measurements. As noted above, these errors are $\pm 3.8$Å and may be reduced using optimal optical arrangement and super-resolution processing to be at least $\pm 3$Å for the anisotropy values < 0.05, and to less than $\pm 2$Å for typical intramolecular FRET measurements.

Thus, the present technique provides a system and corresponding method enabling detection of one or more single FRET event in a sample. The present technique enables simple detection of molecular structures, e.g. DNA sequence using proper selection of molecular probes associated with selected fluorophore mounted on the probes.

## Claims

1.  A system for monitoring a sample, comprising:

    a light unit (302) configured for illuminating the sample in at least a first, donor fluorophore excitation wavelength range and a second, acceptor fluorophore excitation wavelength range;
    a collection unit (304) configured for collecting a light emitted from the sample in at least a third wavelength range and directing said emitted light towards at least one detector (310), wherein said third wavelength range comprises wavelength associated with donor fluorescence emission;
    the at least one detector (310) configured for detecting light of said third wavelength range, collected by said collection unit, and for generating at least one stream of data pieces indicative of intensity pattern of collected light at a selected sampling rate;
    an activation unit (306) configured for providing an activation signal to selectively activate at least a portion of fluorescent substance in the sample, said activation unit either (i) comprising an activation light source configured to provide illumination with a fourth, activating illumination wavelength range and a processing circuitry (308) is configured for operating said activation light source to provide a selected temporal activation illumination intensity profile of the fourth wavelength range, or (ii) configured for releasing chemical reactant into said sample or for providing illumination at amount or intensity sufficient for activating up to 10 fluorophores within a region of diffraction limited spot in the sample for a given activation signal, the diffraction limited spot is determined by optical elements comprised in the collection unit; and
    the processing circuitry (308) configured for operating the light unit (302) to determine a selected temporal illumination profile of said at least first and second wavelength ranges and for operating the activation unit (306) for controllable activation;
    wherein said temporal illumination profile comprises (i) a continuous illumination of the first wavelength range, or a lower modulation frequency and temporally overlapping with respect to modulation frequency of the second wavelength range and (ii) a selected temporal intensity modulation of said second wavelength range of a selected modulation pattern; wherein the acceptor excitation wavelength range temporal intensity modulation pattern is selected for saturating the acceptor fluorophores at a known and desired time; wherein said processing circuitry (308) is configured for controlling the light unit (302) to provide said selected temporal illumination profile comprising a selected temporal intensity modulation of said second, acceptor excitation wavelength range of a selected modulation pattern; and wherein the processing circuitry (308) is configured for receiving and processing said at least one stream of data pieces associated with intensity of collected light to identify modulated intensity profile of said collected light within one or more time windows to provide output data thereof, and wherein said one or more time windows is associated with a selected duration following provision of the activation signal for activation of fluorophores in the sample.

2. The system of claim 1, wherein the light unit comprises at least a donor illumination light source for providing the donor fluorophore excitation light wavelength range and an acceptor illumination light source for providing the acceptor fluorophore excitation light wavelength range.

3. The system of claim 1, wherein said temporal activation illumination of the fourth wavelength range comprising at least one of: a pulse temporal pattern and continuous illumination pattern.

4. The system of any one of claims 1-3, wherein the light unit comprises an optical arrangement adapted for directing said at least two different wavelength ranges towards a common selected region of the sample.

5. The system of any one of claims 1-4, wherein the detector is one of: (1) a detector that comprises a pixel array positioned at an image plane with respect to at least a region of the sample; or (2) a single pixel detector.

6. The system of claim 5, wherein the processing circuitry is configured to select said one or more time windows by identifying time variation of intensity profile in said at least one stream of data pieces associated with intensity of collected light.

7. The system of claim 6, wherein the processing circuitry is configured to determine FRET interaction distances in said identified modulated intensity profile utilizing level of modulation of the collected light; and wherein the processing circuitry is configured to determine temporal frequency components of said collected data piece in said one or more time windows.

8. A method for monitoring a sample, comprising:

providing activation signal, by an activation unit (306), to the sample for activating a selected amount of fluorophores in the sample, said activation signal is at least one of: (i) illumination of a fourth wavelength range selected for photoactivating a portion of fluorophore in the sample, or (ii) controllable releasing of chemical reactant into said sample;
illuminating, by a light unit (302), at least a region of the sample with a first, donor fluorophore excitation, illumination wavelength range and a temporally modulated second, acceptor fluorophore excitation wavelength range, wherein said temporal illumination profile is selected to result in alternate saturation of acceptor fluorophores in the sample causing a variation of emission of donor fluorophore over time, said temporal illumination profile comprises (i) a continuous illumination of the first wavelength range, or a lower modulation frequency and temporally overlapping with respect to modulation frequency of the second wavelength range and (ii) a selected temporal intensity modulation of said second wavelength range of a selected modulation pattern;
collecting, by a collection unit (304), and detecting , by a detecor (310), from the region of the sample light of a third wavelength range to provide data pieces associated with intensity profile of emission from said region of the sample, wherein said third wavelength range comprises wavelength associated with donor fluorescence emission;
processing , by a processing circuitry (308), said data pieces associated with intensity of collected light to identify modulated intensity profile of said collected light within one or more time windows to provide output data thereof, and
wherein said one or more time windows are associated with a duration following providing said activation signal to the sample.

9. The method of claim 8, comprising processing said data pieces and identifying modulated intensity profile of said collected light within one or more time windows;
wherein said one or more time windows are associated with a time variation of intensity profile of said detected third wavelength range.

**Patentansprüche**

1. System zur Überwachung einer Probe, umfassend:

   eine Lichteinheit (302), die zum Beleuchten der Probe in mindestens einem ersten Wellenlängenbereich zur Anregung des Donor-Fluorophors und einem zweiten Wellenlängenbereich zur Anregung des Akzeptor-Fluorophors konfiguriert ist;
   eine Sammeleinheit (304), die zum Sammeln von Licht, das von der Probe in mindestens einem dritten Wellenlängenbereich emittiert wird, und zum Leiten des emittierten Lichts zu mindestens einem Detektor (310) konfiguriert ist,
   wobei der dritte Wellenlängenbereich eine Wellenlänge umfasst, die mit der Donor-Fluoreszenzemission assoziiert ist;
   den mindestens einen Detektor (310), der so konfiguriert ist, dass er Licht des dritten Wellenlängenbereichs, das von der Sammeleinheit gesammelt wurde, erfasst und mindestens einen Strom von Datenstücken erzeugt, die das Intensitätsmuster des gesammelten Lichts mit einer ausgewählten Abtastrate anzeigen;
   eine Aktivierungseinheit (306), die so konfiguriert ist, dass sie ein Aktivierungssignal bereitstellt, um mindestens einen Teil der fluoreszierenden Substanz in der Probe selektiv zu aktivieren, wobei die Aktivierungseinheit entweder (i) eine Aktivierungslichtquelle umfasst, die so konfiguriert ist, dass sie eine Beleuchtung mit einem vierten, aktivierenden Beleuchtungswellenlängenbereich bereitstellt, und eine Verarbeitungsschaltung (308) die zum Betreiben der Aktivierungslichtquelle konfiguriert ist, um ein ausgewähltes zeitliches Aktivierungsbeleuchtungsintensitätsprofil des vierten Wellenlängenbereichs bereitzustellen, oder (ii) zum Freisetzen eines chemischen Reaktionsmittels in die Probe oder zum Bereitstellen einer Beleuchtung in einer Menge oder Intensität, die ausreicht, um bis zu 10 Fluorophore innerhalb eines Bereichs eines beugungsbegrenzten Flecks in der Probe für ein gegebenes Aktivierungssignal zu aktivieren, wobei der beugungsbegrenzte Fleck durch in der Sammeleinheit enthaltene optische Elemente bestimmt wird; und
   die Verarbeitungsschaltung (308) ist konfiguriert, um die Lichteinheit (302) zu betreiben, um ein ausgewähltes zeitliches Beleuchtungsprofil des mindestens ersten und zweiten Wellenlängenbereichs zu bestimmen, und um die Aktivierungseinheit (306) für eine steuerbare Aktivierung zu betreiben;
   wobei das zeitliche Beleuchtungsprofil umfasst (i) eine kontinuierliche Beleuchtung des ersten Wellenlängenbereichs oder eine niedrigere Modulationsfrequenz und eine zeitliche Überlappung in Bezug auf die Modulationsfrequenz des zweiten Wellenlängenbereichs und
   (ii) eine ausgewählte zeitliche Intensitätsmodulation des zweiten Wellenlängenbereichs eines ausgewählten Modulationsmusters; wobei das zeitliche Intensitätsmodulationsmuster des Akzeptor-Anregungswellenlängenbereichs ausgewählt wird, um die Akzeptor-Fluorophore zu einem bekannten und gewünschten Zeitpunkt zu sättigen;
   wobei die Verarbeitungsschaltung (308) so konfiguriert ist, dass sie die Lichteinheit (302) so steuert, dass sie das ausgewählte zeitliche Beleuchtungsprofil bereitstellt, das eine ausgewählte zeitliche Intensitätsmodulation des zweiten Akzeptor-Anregungswellenlängenbereichs eines ausgewählten Modulationsmusters umfasst; und
   wobei die Verarbeitungsschaltung (308) so konfiguriert ist, dass sie den mindestens einen Strom von Datenstücken empfängt und verarbeitet, die mit der Intensität des gesammelten Lichts verbunden sind, um das modulierte Intensitätsprofil des gesammelten Lichts innerhalb eines oder mehrerer Zeitfenster zu identifizieren, um dessen Ausgangsdaten bereitzustellen, und
   wobei das eine oder die mehreren Zeitfenster mit einer ausgewählten Dauer nach Bereitstellung des Aktivierungssignals zur Aktivierung der Fluorophore in der Probe verbunden sind.

2. Das System nach Anspruch 1, wobei die Lichteinheit mindestens eine Donor-Beleuchtungslichtquelle zum Bereitstellen des Donor-Fluorophor-Anregungslichtwellenlängenbereichs und eine Akzeptor-Beleuchtungslichtquelle zum Bereitstellen des Akzeptor-Fluorophor-Anregungslichtwellenlängenbereichs umfasst.

3. System nach Anspruch 1, wobei die zeitliche Aktivierungsbeleuchtung des vierten Wellenlängenbereichs mindestens eines der folgenden umfasst: ein zeitliches Impulsmuster und ein kontinuierliches Beleuchtungsmuster.

**4.** System nach einem der Ansprüche 1 bis 3,
wobei die Lichteinheit eine optische Anordnung umfasst, die dazu ausgelegt ist, die mindestens zwei verschiedenen Wellenlängenbereiche auf einen gemeinsamen ausgewählten Bereich der Probe zu richten.

**5.** Das System nach einem der Ansprüche 1 bis 4,
wobei der Detektor eines der folgenden ist: (1) ein Detektor, der eine Pixelanordnung umfasst, die in Bezug auf mindestens einen Bereich der Probe in einer Bildebene positioniert ist; oder (2) ein Einzelpixel-Detektor.

**6.** Das System nach Anspruch 5,
wobei die Verarbeitungsschaltung so konfiguriert ist, dass sie das eine oder die mehreren Zeitfenster auswählt, indem sie die zeitliche Variation des Intensitätsprofils in dem mindestens einen Strom von Datenstücken identifiziert, die mit der Intensität des gesammelten Lichts verbunden sind.

**7.** Das System nach Anspruch 6,

wobei die Verarbeitungsschaltung so konfiguriert ist, dass sie FRET-Wechselwirkungsabstände in dem identifizierten modulierten Intensitätsprofil unter Verwendung des Modulationsgrades des gesammelten Lichts bestimmt; und
wobei die Verarbeitungsschaltung so konfiguriert ist, dass sie zeitliche Frequenzkomponenten des gesammelten Datenstücks in dem einen oder den mehreren Zeitfenstern bestimmt.

**8.** Verfahren zum Überwachen einer Probe, umfassend:

Bereitstellen eines Aktivierungssignals durch eine Aktivierungseinheit (306)
an die Probe zum Aktivieren einer ausgewählten Menge an Fluorophoren in der Probe, wobei das Aktivierungssignal mindestens eines der folgenden ist: (i) Beleuchten eines vierten Wellenlängenbereichs, der zum Photoaktivieren eines Teils des Fluorophors in der Probe ausgewählt ist, oder (ii) steuerbares Freisetzen eines chemischen Reaktionsmittels in die Probe;
Beleuchten mindestens eines Bereichs der Probe durch eine Lichteinheit (302)
mit einem ersten Wellenlängenbereich zur Anregung des Donor-Fluorophors und einem zeitlich modulierten zweiten Wellenlängenbereich zur Anregung des Akzeptor-Fluorophors, wobei das zeitliche Beleuchtungsprofil so ausgewählt ist, dass es zu einer alternierenden Sättigung der Akzeptor-Fluorophore in der Probe führt, was eine zeitliche Variation der Emission des Donor-Fluorophors bewirkt, wobei das zeitliche Beleuchtungsprofil (i) eine kontinuierliche Beleuchtung des ersten Wellenlängenbereichs oder eine niedrigere Modulationsfrequenz und eine zeitliche Überlappung in Bezug auf die Modulationsfrequenz des zweiten Wellenlängenbereichs und (ii) eine ausgewählte zeitliche Intensitätsmodulation des zweiten Wellenlängenbereichs eines ausgewählten Modulationsmusters umfasst;
Sammeln durch eine Sammeleinheit (304) und Erfassen durch einen Detektor (310)
von Licht eines dritten Wellenlängenbereichs aus dem Bereich der Probe, um Datenstücke bereitzustellen, die mit dem Intensitätsprofil der Emission aus dem Bereich der Probe verbunden sind, wobei der dritte Wellenlängenbereich eine Wellenlänge umfasst, die mit der Donor-Fluoreszenzemission verbunden ist;
Verarbeiten durch eine Verarbeitungsschaltung (308) der Datenstücke, die mit der Intensität des gesammelten Lichts verbunden sind, um das modulierte Intensitätsprofil des gesammelten Lichts innerhalb eines oder mehrerer Zeitfenster zu identifizieren, um Ausgabedaten davon bereitzustellen, und
wobei das eine oder die mehreren Zeitfenster mit einer Dauer verbunden sind, die auf die Bereitstellung des Aktivierungssignals an die Probe folgt.

**9.** Verfahren nach Anspruch 8,

umfassend das Verarbeiten der Datenstücke und das Identifizieren des modulierten Intensitätsprofils des gesammelten Lichts innerhalb eines oder mehrerer Zeitfenster;
wobei das eine oder die mehreren Zeitfenster mit einer zeitlichen Veränderung des Intensitätsprofils des erfassten dritten Wellenlängenbereichs verbunden sind.

**Revendications**

**1.** Système de surveillance d'un échantillon, comprenant :

une unité lumineuse (302) configurée pour éclairer l'échantillon dans au moins une première plage de longueurs d'onde d'excitation du fluorophore donneur et une deuxième plage de longueurs d'onde d'excitation du fluorophore accepteur ;

une unité de collecte (304) configurée pour collecter une lumière émise par l'échantillon dans au moins une troisième plage de longueurs d'onde et diriger ladite lumière émise vers au moins un détecteur (310), où ladite troisième plage de longueurs d'onde comprend une longueur d'onde associée à l'émission de fluorescence du donneur ;

le au moins un détecteur (310) configuré pour détecter la lumière de ladite troisième plage de longueurs d'onde, collectée par ladite unité de collecte, et pour générer au moins un flux de données indicatives du profil d'intensité de la lumière collectée à une fréquence d'échantillonnage sélectionnée ;

une unité d'activation (306) configurée pour fournir un signal d'activation afin d'activer de manière sélective au moins une partie de la substance fluorescente dans l'échantillon, ladite unité d'activation (i) comprenant une source de lumière d'activation configurée pour fournir un éclairage avec une quatrième plage de longueurs d'onde d'éclairage d'activation et un circuit de traitement (308) configuré pour faire fonctionner ladite source lumineuse d'activation afin de fournir un profil d'intensité d'éclairage d'activation temporel sélectionné de la quatrième gamme de longueurs d'onde, ou (ii) configuré pour libérer un réactif chimique dans ledit échantillon ou pour fournir un éclairage d'une quantité ou d'une intensité suffisante pour activer jusqu'à 10 fluorophores dans une région de spot limité par diffraction dans l'échantillon pour un signal d'activation donné, le spot limité par diffraction étant déterminé par des éléments optiques compris dans l'unité de collecte ; et

le circuit de traitement (308) est configuré pour faire fonctionner l'unité d'éclairage (302) afin de déterminer un profil d'éclairage temporel sélectionné desdites au moins première et deuxième gammes de longueurs d'onde et pour faire fonctionner l'unité d'activation (306) pour une activation contrôlable ;

où ledit profil d'éclairage temporel comprend (i) un éclairage continu de la première gamme de longueurs d'onde, ou une fréquence de modulation inférieure et se chevauchant temporellement par rapport à la fréquence de modulation de la deuxième gamme de longueurs d'onde et

(ii) une modulation d'intensité temporelle sélectionnée de ladite deuxième gamme de longueurs d'onde d'un motif de modulation sélectionné ; où le motif de modulation d'intensité temporelle de la gamme de longueurs d'onde d'excitation de l'accepteur est sélectionné pour saturer les fluorophores accepteurs à un moment connu et souhaité ;

où ledit circuit de traitement (308) est configuré pour commander l'unité d'éclairage (302) afin de fournir ledit profil d'éclairage temporel sélectionné comprenant une modulation d'intensité temporelle sélectionnée de ladite seconde plage de longueurs d'onde d'excitation de l'accepteur d'un motif de modulation sélectionné ; et

où le circuit de traitement (308) est configuré pour recevoir et traiter ledit au moins un flux de données associées à l'intensité de la lumière collectée afin d'identifier le profil d'intensité modulé de ladite lumière collectée dans une ou plusieurs fenêtres temporelles afin de fournir des données de sortie de celles-ci, et

où ladite ou lesdites fenêtres temporelles sont associées à une durée sélectionnée suivant la fourniture du signal d'activation pour l'activation des fluorophores dans l'échantillon.

2. Le système selon la revendication 1, où l'unité lumineuse comprend au moins une source lumineuse d'illumination du donneur pour fournir la plage de longueurs d'onde de la lumière d'excitation du fluorophore donneur et une source lumineuse d'illumination de l'accepteur pour fournir la plage de longueurs d'onde de la lumière d'excitation du fluorophore accepteur.

3. Le système selon la revendication 1, où ledit éclairage d'activation temporelle de la quatrième gamme de longueurs d'onde comprend au moins l'un des éléments suivants : un motif temporel pulsé et un motif d'éclairage continu.

4. Le système selon l'une quelconque des revendications 1 à 3,
où l'unité d'éclairage comprend un agencement optique adapté pour diriger lesdites au moins deux gammes de longueurs d'onde différentes vers une région commune sélectionnée de l'échantillon.

5. Le système selon l'une quelconque des revendications 1 à 4,
où le détecteur est l'un des suivants : (1) un détecteur qui comprend un réseau de pixels positionné dans un plan image par rapport à au moins une région de l'échantillon ; ou (2) un détecteur à pixel unique.

6. Système selon la revendication 5,
où le circuit de traitement est configuré pour sélectionner ladite ou lesdites fenêtres temporelles en identifiant la variation temporelle du profil d'intensité dans ledit au moins un flux de données associées à l'intensité de la lumière collectée.

7. Système selon la revendication 6,

où le circuit de traitement est configuré pour déterminer les distances d'interaction FRET dans ledit profil d'intensité modulé identifié en utilisant le niveau de modulation de la lumière collectée ; et
où le circuit de traitement est configuré pour déterminer les composantes de fréquence temporelle dudit élément de données collecté dans ladite ou lesdites fenêtres temporelles.

8. Procédé de surveillance d'un échantillon, comprenant :

la fourniture d'un signal d'activation, par une unité d'activation (306),
à l'échantillon pour activer une quantité =: sélectionnée de fluorophores dans l'échantillon, ledit signal d'activation étant au moins l'un des suivants : (i) l'illumination d'une quatrième gamme de longueurs d'onde sélectionnée pour photoactiver une partie du fluorophore dans l'échantillon, ou (ii) la libération contrôlable d'un réactif chimique dans ledit échantillon ;
l'illumination, par une unité d'éclairage (302),
d'au moins une région de l'échantillon avec une première gamme de longueurs d'onde d'illumination d'excitation de fluorophore donneur et une deuxième gamme de longueurs d'onde d'excitation de fluorophore accepteur modulée dans le temps, où ledit profil d'illumination temporel est sélectionné pour entraîner une saturation alternée des fluorophores accepteurs dans l'échantillon, provoquant une variation de l'émission du fluorophore donneur au fil du temps, ledit profil d'illumination temporel comprenant (i) un éclairage continu de la première gamme de longueurs d'onde, ou une fréquence de modulation inférieure et se chevauchant temporellement par rapport à la fréquence de modulation de la deuxième gamme de longueurs d'onde et (ii) une modulation d'intensité temporelle sélectionnée de ladite deuxième gamme de longueurs d'onde d'un motif de modulation sélectionné ;
la collecte, par une unité de collecte (304), et la détection, par un détecteur (310),
à partir de la région de l'échantillon, de la lumière d'une troisième plage de longueurs d'onde afin de fournir des éléments de données associés au profil d'intensité de l'émission provenant de ladite région de l'échantillon, où ladite troisième plage de longueurs d'onde comprend une longueur d'onde associée à l'émission de fluorescence du donneur ;
traiter, à l'aide d'un circuit de traitement (308),
lesdites données associées à l'intensité de la lumière collectée afin d'identifier le profil d'intensité modulé de ladite lumière collectée dans une ou plusieurs fenêtres temporelles afin de fournir des données de sortie de celles-ci, et
où ladite ou lesdites fenêtres temporelles sont associées à une durée suivant la fourniture dudit signal d'activation à l'échantillon.

9. Procédé selon la revendication 8,

comprenant le traitement desdites données et l'identification du profil d'intensité modulé de ladite lumière collectée dans une ou plusieurs fenêtres temporelles ;
où ladite ou lesdites fenêtres temporelles sont associées à une variation temporelle du profil d'intensité de ladite troisième gamme de longueurs d'onde détectée.

Fig. 1A

Fig. 1B

Fig. 1C

Fig. 2A

Fig. 2B

Fig. 3A

Fig. 3B

Fig. 3C

activation
unit 406

Light unit
402

418_b   420   422   EI

Al'   Al#   424
Detection
unit 409

408

418_a   DI'

404

DI'

FE   410

DI   AI

401

Sample
mount 416

424

412_a   412_b

Acceptor Modulation

**Fig. 4A**

Detection
unit 409

430    430

Light unit
402

406    418_b    422    EI

424

AI#

418_a    420

DI'    460

AI'

401

DI    AI

432

FE

410

Acceptor Modulation

412_a    412_b

408

Fig. 4B

Fig. 5

Excitation sequence

**Fig. 6A**

Detected emission

**Fig. 6B**

Fig. 7A

Fig. 7B

Fig. 7C

Fig. 7D

852 | Controlling a portion of activated fluorophores in a sample

854 | Illuminating the sample with temporal profile of a first illumination wavelength range

856 | Illuminating the sample with temporal profile of a second illumination wavelength range

858 | Collecting and detecting emitted light from the sample

860 | Generating image data over time based on the detected emitted light

**Fig. 8A**

852 | Controlling a portion of photoactivated fluorophores in a sample

854 | Illuminating the sample with temporal profile of a first illumination wavelength range

856 | Illuminating the sample with temporal profile of a second illumination wavelength range

858 | Collecting and detecting emitted light from the sample

860 | Generating image data over time based on the detected emitted light

862 | Processing the image data and identifying FRET events therein

Fig. 8B

| 850 | Providing a sample and mixing it with a population of donor and acceptor fluorophores |
|---|---|

| 852 | Controlling a portion of photoactivated fluorophores in the sample |
|---|---|

| 854 | Illuminating the sample with temporal profile of a first illumination wavelength range |
|---|---|

| 856 | Illuminating the sample with temporal profile of a second illumination wavelength range |
|---|---|

| 858 | Collecting and detecting emitted light from the sample |
|---|---|

| 860 | Generating image data over time based on the detected emitted light |
|---|---|

| 862 | Processing the image data and identifying FRET events therein |
|---|---|

| 864 | Outputting data indicative of the detected FRET events |
|---|---|

Fig. 8C

**Fig. 9A**

**Fig. 9B**

Fig. 9C

Fig. 9D

r (nm)
4.6
4.9
5.3
5.6
6.1
6.6
7.6

2 μm          30 nm

**Fig. 10A**          **Fig. 10B**

r (nm)
4.6
4.9
5.3
5.6
6.1
6.6
7.6

2 μm          60 nm

**Fig. 10C**          **Fig. 10D**

Fig. 10E

Fig. 10F

Fig. 11A

Fig. 11B

Fig. 11C

## Fig. 11D

## Fig. 11E

## Fig. 11F

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAZI A**. Caging and Photoactivation in Single-Molecule Förster Resonance Energy Transfer Experiments. *Biochemistry*, vol. 56 (14)